# EUROPÄISCHE PATENTSCHRIFT

(11) **EP 1 585 793 B1**
(45) Veröffentlichungstag und Bekanntmachung des Hinweises auf die Patenterteilung: **15.03.2017**
(21) Anmeldenummer: 04701002.0
(22) Anmeldetag: 09.01.2004
(51) Int. Cl.: C09D 5/08, C09D 4/00

(54) **VERFAHREN ZUR BESCHICHTUNG VON METALLISCHEN OBERFLÄCHEN, BESCHICHTUNGSZUSAMMENSETZUNG UND DERART HERGESTELLTE ÜBERZÜGE**
METHOD FOR COATING METALLIC SURFACES, COATING COMPOSITION, AND COATINGS PRODUCED IN SAID MANNER
PROCEDE POUR RECOUVRIR DES SURFACES METALLIQUES, COMPOSITION DE REVETEMENT ET REVETEMENTS AINSI PRODUITS

(30) Priorität: 11.01.2003 DE 10300751
(43) Veröffentlichungstag der Anmeldung: 19.10.2005
(73) Patentinhaber: Chemetall GmbH, 60487 Frankfurt am Main (DE); Anton André Sohn GmbH, 77728 Oppenau (DE)
(72) Erfinder: GROS, Georg, 77728 Oppenau (DE); WAIDELICH, Stefan, 77728 Oppenau (DE); MAURUS, Norbert, 63225 Langen (DE)
(74) Vertreter: Hübner, Günter
(86) Internationale Anmeldenummer: PCT/EP2004/000108
(87) Internationale Veröffentlichungsnummer: WO 2004/063294

(56) Entgegenhaltungen:
- EP-A- 0 175 035
- WO-A1-2004/050776
- DE-A- 19 925 631
- US-B1- 6 211 262

## Beschreibung

Die Erfindung betrifft ein Verfahren zur Beschichtung von metallischen Oberflächen mit einer organischen Korrosionsschutzzusammensetzung, die Korrosionsschutzzusammensetzung sowie die derart hergestellten Überzüge.

Metallische Bänder, Bleche und Formteile werden in sehr großen Stückzahlen hergestellt und müssen vor Korrosion geschützt werden. Mit mindestens einer Lackschicht beschichtete metallische Unterlagen haben bei bestimmten Fertigungsabläufen dennoch den Nachteil, einen unzureichenden Korrosionsschutz aufzuweisen, wenn die Beschichtungen dünner als z.B. 30 µm sind. Bis heute ist kein ausreichend korrosionsbeständiges und für die schnelle Beschichtung geeignetes Verfahren zur Beschichtung mit einem einzigen dünnen polymeren chromatfreien korrosionsbeständigen Überzug nach Kenntnis der Anmelderin bekannt, das einen ausreichenden Korrosionsschutz ermöglicht.

Bis heute ist nach Kenntnis der Anmelderin noch nirgendwo ein sogenannter Pretreatment-Primer im industriellen Einsatz, bei dem ein dünner, z.B. 5 bis 15 µm dicker, Lackfilm oder ein dünner lackartiger organischer Film von erhöhter Korrosionsbeständigkeit direkt auf die metallische Oberfläche aufgebracht wird, ohne dass eine Vorbehandlungsbeschichtung oder eine ähnliche Beschichtung insbesondere zur Steigerung von Lackhaftung und Korrosionsschutz darunter aufgebracht wird.

DE-A1-196 23 268 beschreibt eine Pulverlackzusammensetzung, bei der ein vergleichsweise hoher Gehalt eines organischen Korrosionsinhibitors zusammen mit einem anorganischen Korrosionsinhibitor eingesetzt wird.

DE 199 25 631 A1 lehrt ein Verfahren zum Aufbringen einer gleitfähigen Korrosionsschutzschicht auf eine metallische Unterlage, wobei ein Gemisch aus einem polymeren organischen Bindemittel, einer niedermolekularen flüssigen, radikalisch polymerisierbaren Verbindung, einer bei Einwirkung vcon aktinischer Strahlung Radikale bildenden Verbindung und einem leitfähigen Pigment eingesetzt wird. Die Zusammensetzungen führen jedoch keinen Gehalt an Isobornylacrylat oder Isobornylmethacrylat auf.

WO 2004/050776 A1 lehrt saure, mit aktinischer Strahlung härtbare Beschichtungsmittel auf Basis von luft- und oxidativ trocknenden Alkydharzen, Estern von Poly- und von Monophosphorsäure und Polyphosphorsäure-Pigment. Diese Anmeldung ist nicht vorpubliziert.

Es bestand daher die Aufgabe eine Korrosionsschutzzusammensetzung vorzuschlagen, die arm oder frei an Wasser bzw. organischem Lösemittel ist (sogenanntes "100 %-System") und die bezüglich Lackhaftung und Korrosionsschutz besonders hochwertig ist oder sogar derart hochwertig ist, dass bei vielen Einsatzzwecken auf die Zwischenschaltung einer Vorbehandlungsbeschichtung verzichtet werden kann, weshalb im letzteren Fall diese Korrosionsschutzzusammensetzung auch als Pretreatment-Primer bezeichnet werden kann. Die Korrosionsschutzzusammensetzung soll nach Möglichkeit vielseitig und im Serienmaßstab einsetzbar sowie möglichst kostengünstig sein. Hierbei wäre es vorteilhaft, den Gehalt an besonders teuren Korrosionsinhibitoren und anderen teuren Komponenten reduzieren zu können. Der damit hergestellte Korrosionsschutzüberzug soll zusammen mit dem metallischen Substrat und mit der ggf. zusätzlich darauf aufgebrachten mindestens einen weiteren Lackschicht gut umformbar sein und soll auch nach dem Umformen einen guten Korrosionsschutz und eine gute Lackhaftung aufweisen. Hierbei ist es wünschenswert, dass möglichst viele dieser Eigenschaften auch von Dünnfilmen mit einer Trockenfilmdicke insbesondere im Bereich von 4 bis 12 µm erreicht werden, ggf. bei geringeren Korrosionsschutzanforderungen auch mit einer Trockenfilmdicke im Bereich von 1 bis 4 µm. Ferner wird es bevorzugt, wenn die Korrosionsschutzzusammensetzung für eine schnelle Beschichtung von metallischen Bändern gut geeignet ist.

Die Korrosionsschutzzusammensetzung sollte nach Möglichkeit zumindest einzelne der folgenden Forderungen erfüllen können, einerseits als Korrosionsschutzüberzug auflagernd auf mindestens einer Vorbehandlungsschicht, andererseits trotz Weglassens aller Vorbehandlungsschichten, jeweils als organische Dünnfilmbeschichtung mit einer Trockenfilmdicke im Bereich von 0,4 bis 20 µm und vorzugsweise von weniger als 10 µm:
1. Dass es gelingt, die Korrosionsbeständigkeit von konventionellen Primerbeschichtungen in mindestens etwa gleicher Höhe zu erhalten oder sogar deutlich zu steigern, wobei die Korrosionsbeständigkeit je nach Anwendungsgebiet über 100 h oder 150 h im Salzsprühtest nach DIN 50021 beständig sein soll;
2. dass es gelingt, die Haftung des Korrosionsschutzüberzugs so sehr anzuheben, dass die Vorbehandlungsschicht, die sonst vor allem auch zur Steigerung der Haftung der Lackschicht auf dem Untergrund eingesetzt wird, eingespart werden kann;
3. dass es gelingt, die Flexibilität des Korrosionsschutzüberzugs zu steigern, z.B. auf Werte von ≤ T3, von ≤ T2 oder von ≤ T1 beim T-Bend-Test nach ECCA-Standard T7, möglichst so sehr, dass er mit einer Trockenfilmdicke im Bereich von 0,4 bis 20 µm eine sehr viel höhere Flexibilität als eine konventionelle Primerbeschichtung von typischerweise heute meistens etwa 5 bis 20 µm aufweist, zumal bisher bei keinem 100%-UV-System ein Wert von T0 ermittelt bzw. dazu nach Kenntnis der Anmelderin beschrieben worden ist;
4. dass es gelingt, die Elastizität und Haftfestigkeit der Primerbeschichtung deutlich zu steigern, so dass er eine viel höhere Elastizität und Haftfestigkeit bestimmt über die Tiefung in mm nach DIN EN ISO 1520 als eine konventionelle Primerbeschichtung aufweist;
5. dass es gelingt, die Gleit- und Verformungseigenschaften des Korrosionsschutzüberzugs dahingehend auszubilden, dass er bei Verformung von Blechen durch Näpfchenzug frei von Abrieb und Riefen ist;
6. dass es gelingt, die Chemikalienbeständigkeit des Korrosionsschutzüberzugs zu steigern, so dass er eine viel höhere Chemikalienbeständigkeit als üblich bei einer konventionellen Primerbeschichtung von typischerweise heute meistens < 10 MEK-Zyklen aufweist, möglichst ≥ 60 Zyklen, oder/und
7. dass es gelingt, die Versprödung des Korrosionsschutzüberzugs, der direkt auf die metallische Oberfläche aufgebracht worden ist, bezogen auf das Verhalten wenige Tage nach der Applikation bzw. Vernetzung zu minimieren, so dass der Überzug eine sehr viel geringere Versprödung - ermittelt durch den T-Bend-Test ≤ T1 nach Kurzzeitalterung aufweist als eine Primerbeschichtung, die noch nach der Bestrahlung nachhärtet und dabei bekanntermaßen auch versprödet.

Es wurde überraschend festgestellt, dass es sogar bei so dünnen Schichten wie im Bereich von 4 bis 8 µm Trockenfilmdicke möglich ist, einen hochkorrosionsbeständigen Überzug zu erzeugen, auch wenn keine Vorbehandlungsschicht auf die mit feuerverzinktem Zink beschichteten Stahlbleche aufgebracht worden war und wobei der Korrosionsschutzüberzug direkt auf der Feuerverzinkungsschicht auflagerte: Im Salzsprühtest über 250 h ergab sich auch ohne eine zwischengeschaltete Vorbehandlungsbeschichtung am Ritz eine Unterwanderung von weniger als 2 mm. Eine derartige Korrosionsbeständigkeit eines Lackfilms direkt auf der Feuerverzinkungsschicht aufgebracht ist der Anmelderin weder aus der Praxis, noch aus der Literatur bekannt.

Die Aufgabe wird gelöst mit einem Verfahren zur Beschichtung von Oberflächen von metallischen Substraten, insbesondere von Teilen, Profilen oder/und Bändern, vorzugsweise solchen auf Basis von Aluminium, Magnesium oder/und Stahl, die gegebenenfalls mit mindestens einer metallischen Beschichtung wie z.B. einer Zinkschicht oder mit mindestens einer Zink-haltigen Legierungsschicht vorbeschichtet sind, mit einer organischen, anionisch, kationisch oder/und radikalisch härtbaren Korrosionsschutzzusammensetzung, die dadurch gekennzeichnet ist, dass die Korrosionsschutzzusammensetzung eine Dispersion oder Lösung ist, die bis zu 3 Gew.-% Wasser oder/und bis zu 3 Gew.-% organischer Lösemittel sowie Reaktivverdünner enthält, die mindestens zwei Komponenten ausgewählt aus der Gruppe von Monomeren, Oligomeren und Polymeren mit einem Gesamtgehalt im Bereich von 50 bis 95 Gew.-% enthält, die zumindest teilweise anionisch, kationisch oder/und radikalisch härtbar sind, wobei hierin ein Gehalt an mindestens einem mono-funktionellen Monomer oder/und Oligomer im Bereich von 1 bis 58 Gew.-% mit einem Gehalt an Isobornylacrylat oder/und Isobornylmethacrylat sowie ein Gehalt an mindestens einem Basispolymer auf Basis von Acrylat, Epoxid, Methacrylat, Polyester, Polyurethan oder/und deren Mischpolymerisaten im Bereich von 5 bis 50 Gew.-% enthalten sind, wobei die Korrosionsschutzzusammensetzung außerdem mindestens einen Photoinitiator zur anionischen, kationischen oder/und radikalischen Vernetzung mit einem Gehalt im Bereich von 0,5 bis 22 Gew.-% enthält, falls keine Elektronenstrahlung eingesetzt wird, einen ersten, organischen Korrosionsinhibitor sowie einen Gesamtgehalt an Additiven im Bereich von 0,05 bis 22 Gew.-% enthält, gegebenenfalls jeweils mindestens einen weiteren, organischen oder/und anorganischen Korrosionsinhibitor mit einem Gesamtgehalt im Bereich von 0,1 bis 12 Gew.-% und gegebenenfalls mindestens einen Härter für eine chemische Nachvernetzung mit einem Gehalt im Bereich von 0,05 bis 8 Gew.-% enthält, jeweils bezogen auf die Feststoffgehalte in Gew.-%, wobei die Korrosionsschutzzusammensetzung auf die metallischen Oberflächen in einer Naßfilmdicke im Bereich von 0,4 bis 25 µm aufgebracht wird und danach zu einem Korrosionsschutzüberzug anionisch, kationisch oder/und radikalisch gehärtet wird, wobei der Korrosionsschutzüberzug eine Trockenfilmdicke im Bereich von 0,4 bis 20 µm und eine Chemikalienbeständigkeit von mehr als 40 MEK-Zyklen, ermittelt im MEK-Test nach ECCA-Standard T11 mit Methyl-Ethyl-Keton, aufweist.

Vorzugsweise weist der gehärtete Korrosionsschutzüberzug eine Flexibilität und Haftfestigkeit von ≤ T3, insbesondere von ≤ T2 oder sogar von ≤ T1, auf, bestimmt über einen T-Bend-Test nach ECCA-Standard T7 an 8 µm dick organisch beschichteten, feuerverzinkten Stahlblechen von 0,3 mm Dicke.

Bei der erfindungsgemäßen Korrosionsschutzzusammensetzung handelt es sich vorzugsweise um ein sogenanntes 100 %-UV-System, das weitgehend oder vollständig frei von Wasser oder/und von organischem Lösemittel ist. Hierbei sind Mengen von bis zu 3 Gew.-% Wasser oder/und von bis zu 3 Gew.-% organischer Lösemittel bevorzugt besonders bevorzugt sind Mengen von bis zu 1 Gew.-% Wasser oder/und von bis zu 1 Gew.-% organischer Lösemittel, weil der Trocknungsaufwand und die Trocknungsdauer umso geringer sind und weil der dabei entstehende Überzug - falls notwendig - schneller bzw. in kürzerem Abstand zum Bereich des Aufbringens des polymeren Gemisches durch Einwirkung von Strahlung zum Aushärten angeregt und ausgehärtet werden kann. Dann kann z.B. ein Band mit dem erfindungsgemäßen Überzug - falls notwendig - schneller bzw. in kürzerem Abstand zum Bereich des Aufbringens der Korrosionsschutzzusammensetzung durch Einwirkung von aktinischer Strahlung zum Aushärten angeregt und ausgehärtet werden kann.

Unter aktinischer Strahlung ist solche Strahlung zu verstehen, deren Energie, Frequenzen bzw. angewandte Dosis zur Aktivierung des Polymerisationsinitiators (= Photoinitiators) geeignet ist bzw. für eine weitgehende oder möglichst vollständige Polymerisation ausreicht. Sie sollte normalerweise mindestens die Energie bzw. die Frequenz des sichtbaren Lichts bzw. des UV-Lichts haben. Bevorzugt wird kurzwelliges sichtbares oder/und ultraviolettes Licht (UV-Licht). Naturgemäß ist jede Strahlung kürzerer Wellenlänge, also höherer Energie, ebenfalls geeignet. So kann z.B. auch Elektronenstrahlung eingesetzt werden, bei der ggf. sogar kein Einsatz eines Photoinitiators erforderlich ist. Die durch die aktinische Strahlung ausgelösten chemischen Reaktionen werden bei der Freisetzung von freien Radikalen auch als radikalische Härtung oder radikalische Vernetzung bzw. UV-Härtung bezeichnet, wobei UV-Härtung im Sinne dieser Anmeldung die Härtung bei jeder Art aktinischer Strahlung umfassen soll. Die anionische, kationische oder/und radikalische Aushärtung erfolgt vorzugsweise im Temperaturbereich von 12 bis 200 °C, besonders bevorzugt bei 15 bis 140 °C, insbesondere bei Temperaturen im Bereich von Raumtemperatur bis 70 °C.

Das erfindungsgemäße Beschichtungsgemisch kann einen Gehalt an mindestens einer bei Einwirkung von aktinischer Strahlung freie Radikale bildenden Verbindung (sog. Photoinitiator) enthalten, wobei der Gesamtgehalt an freie Radikale bildenden Verbindungen insbesondere im Bereich von 3 bis 15 Gew.-% betragen kann bezogen auf die Trockensubstanz. Vorzugsweise liegt ihr Gesamtgehalt im Bereich von 4 bis 14 Gew.-%, besonders bevorzugt im Bereich von 5 bis 13 Gew.-%, ganz besonders bevorzugt im Bereich von 6 bis 12 Gew.-%. Für die Erzielung höchster Reaktivitäten und MEK-Beständigkeiten kann dieser Bereich jedoch um bis zu 4 Gew.-% heraufgesetzt sein, also bei z.B. 8 bis 18 Gew.-% liegen. Bei Einwirkung von aktinischer Strahlung, insbesondere von UV-Strahlung, bildet der mindestens eine Photoinitiator freie Radikale aus, die mit dem radikalisch polymerisierbaren Bindemittel reagieren und dieses bei der und ggf. kurze Zeit nach der aktinischen Bestrahlung unvollständig oder vollständig vernetzen. Die radikalisch polymerisierbaren Verbindungen haben ungesättigte polymerisierbare Gruppen, die mit den strahlungsinitiiert aus den Photoinitiatoren entstehenden Gruppen reagieren und ein wasserunlösliches Netzwerk bilden können. Nach dieser chemischen Reaktion kann dieses Bindemittel ggf. noch reaktive Gruppen wie OH- und Polyol-Gruppen aufweisen, die die chemische Beständigkeit und die Korrosionsbeständigkeit der hieraus gebildeten Beschichtung begrenzen können.

Vorzugsweise wird das polymere Gemisch durch erhöhte Gehalte an mindestens einem Photoinitiator besonders reaktiv gestaltet, insbesondere um eine schnelle(re) oder/und möglichst weitgehende Durchhärtung zu erzielen. Insbesondere für eine gute Chemikalienbeständigkeit ist i.d.R. eine ausreichende Grundvernetzung erforderlich. Alternativ bzw. zusätzlich kann die Strahlungsdosis erhöht werden oder/und ein reaktiveres anionisch, kationisch oder/und radikalisch härtendes Polymer eingesetzt werden. Dadurch wird schnell ein hoher Vernetzungsgrad erreicht, insbesondere auch eine Durchvernetzung.

Vorzugsweise enthält die Korrosionsschutzzusammensetzung Wasser oder/und mindestens ein organisches Lösemittel in einem Gesamtgehalt von nur bis zu 2,5 Gew.-%, besonders bevorzugt von nur bis zu 1,5 Gew.-%, ganz besonders bevorzugt nur von bis zu 0,8 Gew.-%, insbesondere von weniger als 0,5 Gew.-%, vor allem von weniger als 0,3 oder von weniger als 0,15 Gew.-%, jeweils bezogen auf Feststoffgehalte in Gew.-%. Der Gesamtgehalt an Wasser oder/und mindestens einem Lösemittel beträgt vorzugsweise 0,02 bis 4,5 Gew.-%, besonders bevorzugt 0,025 bis 4 Gew.-%, ganz besonders bevorzugt mindestens 0,03 Gew.-% bzw. bis zu 3,5 Gew.-%, insbesondere mindestens 0,05 Gew.-% bzw. bis zu 3,2 Gew.-%. Als organische Lösemittel sind insbesondere kennzeichnungsfreie dünnflüssige Lösemittel wie Alkohole bevorzugt bzw. Ester, Ketone, Glykolether oder/und aromatische Kohlenwasserstoffe wie z.B. Xylol geeignet, insbesondere Propylenglykolether.

Es ist bevorzugt, dass die Korrosionsschutzzusammensetzung weitgehend frei ist von organischem Lösemittel. Es ist außerdem bevorzugt, dass der Korrosionsschutzzusammensetzung fast kein oder kein Wasser oder/und kein organisches Lösemittel separat zugesetzt wird und dass derartige Gehalte ggf. nur dann zugesetzt werden, um z.B. die Viskosität der Korrosionsschutzzusammensetzung anzupassen. Üblicherweise enthält mindestens eine der Rohstoffkomponenten einen geringen bzw. sehr geringen Anteil an Wasser oder/und organischem Lösemittel. Die flüssige Konsistenz der erfindungsgemäßen Korrosionsschutzzusammensetzung ergibt sich vorzugsweise aus dem Gehalt, der Konsistenz und dem Löseverhalten insbesondere der für die Polymere zugesetzten Monomere oder/und Oligomere, die deswegen auch Reaktivverdünner genannt werden. Falls jedoch noch eine Mindestmenge an Wasser bzw. organischem Lösemittel im polymeren Überzug beim Beginn der aktinischen Bestrahlung vorhanden sein sollte, kann es leicht zur Bildung von Gasblasen und zum Aufbrechen oder/und Aufwerfen von Teilen des Überzugs (sog. Kocherbildung) kommen.

Die Zusammensetzungen sind dabei bezogen auf Feststoffgehalte in Gew.%, wobei Gehalte an Wasser oder/und organischem Lösemittel über 100 Gew.-% hinausgehen.

Vorzugsweise übernimmt der erfindungsgemäße Korrosionsschutzüberzug auch gleichzeitig die Funktion der Vorbehandlungsschicht, so dass deswegen die Haftung einer erfindungsgemäßen Primer-Beschichtung auf der Unterlage und die Korrosionsbeständigkeit entsprechend hoch sein müssen, um auch ohne die Vorbehandlungsschicht mindestens ausreichende Resultate zu erzielen.

Bei dem erfindungsgemäßen Verfahren kann die Korrosionsschutzzusammensetzung beim Applizieren auf der metallischen Unterlage eine Viskosität vorzugsweise im Bereich von 80 bis 20000 mPa•s aufweisen, besonders bevorzugt im Bereich von 150 bis 15000 mPa•s, ganz besonders bevorzugt im Bereich von mindestens 200 bzw. bis zu 12000 mPa•s, insbesondere auf metallischem Band im Bereich von 350 bis 10000 mPa•s bzw. im Bereich von 450 bis 1200 mPa•s, gemessen bei einer Temperatur von 25 °C mit einem Rotationsviskosimeter VT 500 der Fa. Haake mit einem DIN-Meßzylinder MV nach DIN 53019.

Bei dem erfindungsgemäßen Verfahren kann die Korrosionsschutzzusammensetzung beim Applizieren eine Temperatur im Bereich von 5 bis 90 °C aufweisen, besonders bevorzugt im Bereich von mindestens 15, 20 bzw. 25 °C bzw. bis zu 70 oder 60 °C, insbesonders im Bereich von 20 bis 50 °C.

Bei dem erfindungsgemäßen Verfahren kann die Korrosionsschutzzusammensetzung vorzugsweise durch Gießen ohne oder mit Rakel, Spritzen, Sprühen, Tauchen oder/und Walzen auf die metallische Oberfläche aufgebracht werden.

Bei dem erfindungsgemäßen Verfahren können die Oberflächen von Aluminium, Aluminium-haltigen Legierungen, Chrom, Chromlegierungen, Magnesiumlegierungen, Edelstählen, Stählen, Zink, Zink-haltigen Legierungen, Zinn oder/und Zinn-haltigen Legierungen beschichtet werden.

Bei dem erfindungsgemäßen Verfahren kann ein metallisches Band bei einer Bandlaufgeschwindigkeit insbesondere im Bereich von 20 bis 220 m pro Minute beschichtet werden, wobei die Auftragsvorrichtung für das Beschichtungsgemisch oder/und die Vorrichtung zur aktinischen Bestrahlung des polymeren Überzugs ortsfest gehalten werden kann/können. Heute werden viele Bandanlagen mit einer Geschwindigkeit im Bereich von 30 bis 130 m/min betrieben. Es ist jedoch absehbar, dass etliche Anlagen zukünftig mit einer Geschwindigkeit im Bereich von 80 bis 200 m/min, insbesondere im Bereich von 100 bis 180 m/min betrieben werden werden. Die Steigerung der Geschwindigkeit insbesondere über 120 m/min hinaus setzt dabei die sichere Erfüllung der besonders großen Anforderungen an die Anlage, an die Automatisierung des Verfahrens, an die Qualität der für das Beschichten eingesetzten Gemische und an die Prozeßsicherheit voraus. Außerdem erfordert eine erhöhte Bandgeschwindigkeit eine besonders schnelle Beschichtung und Vernetzung, um die Bandanlagen nicht zu lang werden zu lassen.

Bei dem erfindungsgemäßen Verfahren kann der Naßfilm der Korrosionsschutzzusammensetzung insbesondere in einer Schichtdicke im Bereich von 0,45 bis 22 µm aufgebracht werden, vorzugsweise im Bereich von 0,5 bis 18 µm, besonders bevorzugt im Bereich von 0,6 bis 14 µm, besonders bevorzugt von mindestens 0,8 µm bzw. bis zu 10 µm, vor allem von mindestens 1 µm bzw. bis zu 8 µm.

Bei dem erfindungsgemäßen Verfahren kann der Naßfilm der Korrosionsschutzzusammensetzung insbesondere bei Temperaturen im Bereich von 30 bis 95 °C, besonders bevorzugt im Bereich von 40 bis 80 °C, getrocknet werden, vorzugsweise durch Aufheizen in einem Ofen, induktive Trocknung, IR-Bestrahlung, NIR-Bestrahlung (nahes Infrarot) oder/und Mikrowellenbestrahlung.

Bei dem erfindungsgemäßen Verfahren kann der weitgehend oder vollständig trockene Film der Korrosionsschutzzusammensetzung vorzugsweise mit Elektronenstrahlung, anderer kurzwelliger energiereicher Strahlung, sichtbarer Strahlung oder/und UV-Strahlung, letztere insbesondere im Wellenlängenbereich von 180 bis 700 nm, besonders bevorzugt mit Emissionsmaxima im Wellenlängenbereich von 200 bis 600 nm, bestrahlt werden und hierdurch teilweise, weitgehend oder vollständig vernetzt werden, insbesondere anionisch, kationisch oder/und radikalisch vernetzt werden. Bevorzugt ist auch die gleichzeitige kationische und radikalische Vernetzung mit UV-Strahlung. Auch Lampen, die im wesentlichen im kurzwelligen sichtbaren Bereich von etwa 400 bis 550 nm emittieren, können verwendet werden. Als Strahlungsquellen werden bevorzugt UV-Lichtquellen wie Gasentladungslampen, Xenonlampen oder Natriumdampflampen eingesetzt. Die Lampenleistung liegt dabei oft im Bereich von 100 bis zukünftig über 300 Watt/cm, vorzugsweise heute im Bereich von 160 bis 240 Watt/cm. Hierbei kann ggf. auch unter weitgehendem oder vollständigem Sauerstoffausschluß bestrahlt werden, wodurch eine bessere Energieausnutzung und schnellere Bandlaufgeschwindigkeit ermöglicht werden kann. Grundsätzlich kann auch Strahlung höherer Energie, zum Beispiel Elektronenstrahlung, zur Härtung eingesetzt werden. Die aktinische Bestrahlung erfolgt, ebenso wie die Beschichtung, vorzugsweise bei Umgebungstemperaturen, die nicht oder nicht wesentlich oberhalb Raumtemperatur, also im allgemeinen nicht oberhalb etwa 65 °C liegen. Die bestrahlte Schichtoberfläche erreicht dabei oft Temperaturen im Bereich von 50 bis zu etwa 130 °C durch die UV-Anregung, die ggf. einen Anteil IR-Strahlung aufweist.

Alternativ oder zusätzlich zur radikalischen Vernetzung kann eine Polymerisation mit mindestens einem Photoinitiator zur anionischen oder/und kationischen Vernetzung, insbesondere zur kationischen Vernetzung, erfolgen. Als anionische oder/und kationische Vernetzung wird eine Polymerisation verstanden, bei der der mindestens eine geeignete Photoinitiator durch Bestrahlung z.B. mit IR-Licht, NIR-Licht (nahes Infrarot), sichtbarem Licht oder/und UV-Licht aktiviert wird und zerfällt und bei der die Zerfallsprodukte mit anionisch oder/und kationisch polymerisierbarer Substanz reagieren und die Kettenlängen vergrößern. Gegebenenfalls kann auch Wärmeenergie zusätzlich unterstützend insbesondere für die kationische Vernetzung eingebracht werden. Die Reaktionen sind üblicherweise etwas langsamer als bei radikalischer Vernetzung. Photoinitiatoren, die dazu eingesetzt werden können, sind beispielsweise solche wie Diazonium-, Ferrocen-, Jodonium-, Sulfonium- oder/und Thiapyrylium-Verbindungen, insbesondere Salze - vorzugsweise Aryldiazoniumsalze, Diaryljodoniumsalze, Triarylsulfoniumsalze - bzw. solche wie metallocenartige Komplexsalze wie auf Basis einer Cyclopentadienyl-Verbindung, z.B. auf Basis einer Cyclopentadienyl-Aryl-Verbindung, und einem Bor, Phosphor, Arsen oder Antimon enthaltenden Fluorkomplex oder auf Basis eines Biscyclopentadienyl-Eisen-Derivats und z.B. einem Chinoid - unter Strahlungseinwirkung Lewis- oder Brönsted-Säuren bilden. Hierbei kann die Anwesenheit mindestens eines Sensibilisators vorteilhaft sein. Als anionisch oder/und kationisch polymerisierbare Substanzen können beispielsweise cyclische Acetale, cyclische Ester, cyclische Ether, cyclische Organosiloxane, cyclische Sulfide, ethylenisch ungesättigte Verbindungen, heterocyclische Verbindungen, Methylolverbindungen, Vinylmonomere, Vinylpräpolymere, Epoxidharze bzw. Gemische mit mindestens einer Verbindung aus diesen Gruppen zugesetzt sein wie Gemische mit aliphatischem, cycloaliphatischem, aromatischem oder/und heterocyclischem Epoxid, Polyester, epoxidiertes Polybutadien, Epoxysilane, Epoxid-Gruppen enthaltenden Verbindungen, Gemische von Epoxid mit thermoplastischer Substanz oder Epoxid-Polyester-Mischungen, beispielsweise auch Epoxidgruppen-haltige Monomere wie solche auf Basis der Glycidylether von Alkoholen bzw. Epoxycyclohexylderivate. Der Gehalt an Photoinitiatoren zur anionischen oder/und kationischen Vernetzung beträgt insbesondere 0,1 bis 5 Gew.-% des Gehalts an anionisch oder/und kationisch polymerisierbaren Substanzen, besonders bevorzugt 0,8 bis 3,5 Gew.-%. Er beträgt vorzugsweise insgesamt 1 bis 20 Gew.-% bezogen auf die Trockensubstanz der Korrosionsschutzzusammensetzung, besonders bevorzugt 1,2 bis 18 Gew.-% bzw. 1,8 bis 16 Gew.-%, ganz besonders bevorzugt 3 bis 15 Gew.-%, insbesondere mindestens 3,5 Gew.-% bzw. bis zu 12 Gew.-%, vor allem mindestens 4 Gew.-% bzw. bis zu 11 Gew.-%, vor allem mindestens 5 bzw. bis zu 9 Gew.-%.

Bei dem erfindungsgemäßen Verfahren kann die Korrosionsschutzzusammensetzung und der damit hergestellte, anionisch, kationisch oder/und radikalisch gehärtete Trockenfilm mindestens einen Härter zur chemischen Vernetzung enthalten, so dass der Trockenfilm, gegebenenfalls nach einer Erhitzung auf mindestens 60 °C oder 80 °C, chemisch nachgehärtet wird, vorzugsweise erhitzt auf Temperaturen im Bereich von 100 bis 320 °C, besonders bevorzugt auf Temperaturen im Bereich von 120 bis 180 °C.

Bei dem erfindungsgemäßen Verfahren kann das mit dem Korrosionsschutzüberzug beschichtete Substrat mit mindestens einer weiteren lackähnlichen Zusammensetzung, mit Lack, Farbe oder/und Klebstoff beschichtet werden.

Bei dem erfindungsgemäßen Verfahren kann der auf dem metallischen Körper aufgebrachte Korrosionsschutzüberzug mit dem Substrat, insbesondere einem Blech, umgeformt werden, wobei der Korrosionsschutzüberzug weitgehend oder gänzlich unbeschädigt bleibt, ggf. trotz starker Umformbedingungen.

Bei dem erfindungsgemäßen Verfahren kann das mit dem Korrosionsschutzüberzug beschichtete, umgeformte Substrat in Form eines umgeformten, geschnittenen oder/und gestanzten Bleches mit einem anderen Konstruktionselement durch Kleben, Schweißen oder/und mindestens einem anderen Fügeverfahren verbunden werden.

Bei dem erfindungsgemäßen Verfahren kann die metallische Oberfläche vor dem Aufbringen der Pretreatment-Primerschicht gereinigt oder/und gebeizt und gegebenenfalls jeweils danach mindestens einmal mit Wasser bzw. einer wässerigen Lösung gespült werden.

Bei dem erfindungsgemäßen Verfahren kann die Lösung oder Dispersion auf ein auf einer Bandanlage geführtes metallisches Band aufgebracht werden, insbesondere auf ein mit Aluminium, mit einer Aluminium-haltigen Legierung oder/und mit mindestens einer Zink-haltigen Legierung beschichtetes Band wie z.B. auf Basis von AlSi-, ZnAl- wie Galfan^{®}, AlZn- wie Galvalume^{®} oder/und anderen Al-Legierungen. Wenn die Aluminium- oder/und Zinkhaltige Beschichtung auf das metallische Band auf der gleichen Bandanlage soeben, das heißt in der Regel nur wenige Sekunden oder Minuten vorher aufgebracht worden ist, ist diese Beschichtung besonders reaktiv und gibt bei sofortiger Beschichtung mit der erfindungsgemäßen Korrosionsschutzzusammensetzung weit bessere Werte der Haftung und Beständigkeit gegen Chemikalien und Schlag als wenn diese Beschichtung erst oberflächlich oxidieren kann, beölt wird, anderweitig beschichtet wird oder/und verschmutzt werden kann.

Das erfindungsgemäße Verfahren zur Beschichtung von Oberflächen von metallischen Substraten, insbesondere von Teilen, Profilen oder/und Bändern, vorzugsweise solchen auf Basis von Aluminium, Magnesium oder/und Stahl, die gegebenenfalls mit mindestens einer metallischen Beschichtung wie z.B. einer Zinkschicht oder mit mindestens einer Zink-haltigen Legierungsschicht vorbeschichtet sind, mit einer organischen, anionisch, kationisch oder/und radikalisch härtbaren Korrosionsschutzzusammensetzung kann auch dadurch gekennzeichnet sein, dass vor der Beschichtung mit einer ersten organischen Korrosionsschutzzusammensetzung keine Vorbehandlungsschicht wie z.B. auf Basis von Chromat, Phosphat, Komplexfluorid, Silan oder/und Siloxan auf die metallischen Oberflächen aufgebracht wird, dass die Korrosionsschutzzusammensetzung eine Dispersion oder Lösung ist, die direkt auf die metallischen Oberflächen in einer Naßfilmdicke im Bereich von 0,4 bis 25 µm - vorzugsweise von 0,6 bis 15 µm, besonders bevorzugt von 0,8 bis 10 µm, insbesondere von 1 bis 8 µm - aufgebracht, gegebenenfalls getrocknet und danach zu einem Korrosionsschutzüberzug anionisch, kationisch oder/und radikalisch gehärtet wird, wobei der gehärtete Film (Korrosionsschutzüberzug) eine Trockenfilmdicke im Bereich von 0,4 bis 20 µm aufweist - vorzugsweise von 0,6 bis 18 µm, besonders bevorzugt von wenigstens 0,8 bzw. von bis zu 12 µm, insbesondere von wenigstens 1 bzw. von bis zu 8 µm, wobei der Korrosionsschutzüberzug eine Chemikalienbeständigkeit von mehr als 40 MEK-Zyklen, ermittelt im MEK-Test nach ECCA-Standard T11 mit Methyl-Ethyl-Keton, und vorzugsweise eine Flexibilität und Haftfestigkeit von ≤ T3, insbesondere von ≤ T2 oder sogar von ≤ T1 erreicht, bestimmt über einen T-Bend-Test nach ECCA-Standard T7 an 8 µm dick organisch beschichteten, feuerzink-vorbeschichteten Stahlblechen von 0,3 mm Dicke. Hierbei ist es besonders erwünscht, dass der erfindungsgemäße Korrosionsschutzüberzug auch gleichzeitig die Funktion der Vorbehandlungsbeschichtung erfüllt, also direkt auf einer metallischen Oberfläche aufgebracht wird, ohne dass eine Vorbehandlungsschicht dazwischengeschaltet wird.

Die Aufgabe wird ebenfalls gelöst mit einer organischen, anionisch, kationisch oder/und radikalisch härtbaren Korrosionsschutzzusammensetzung, die dadurch gekennzeichnet ist, dass sie eine Dispersion oder Lösung ist, die bis zu 3 Gew.-% Wasser oder/und bis zu 3 Gew.-% organischer Lösemittel sowie Reaktivverdünner enthält, die mindestens zwei Komponenten ausgewählt aus der Gruppe von Monomeren, Oligomeren und Polymeren mit einem Gesamtgehalt im Bereich von 50 bis 95 Gew.-% enthält, die zumindest teilweise anionisch, kationisch oder/und radikalisch härtbar sind, wobei hierin ein Gehalt an mindestens einem mono-funktionellen Monomer oder/und Oligomer im Bereich von 1 bis 58 Gew.-% mit einem Gehalt an Isobornylacrylat oder/und Isobornylmethacrylat sowie ein Gehalt an mindestens einem Basispolymer auf Basis von Acrylat, Epoxid, Methacrylat, Polyester, Polyurethan oder/und deren Mischpolymerisaten im Bereich von 5 bis 50 Gew.-% enthalten sind, wobei die Korrosionsschutzzusammensetzung ausserdem mindestens einen Photoinitiator zur anionischen, kationischen oder/und radikalischen Vernetzung mit einem Gehalt im Bereich von 0,5 bis 22 Gew.-% enthält, falls keine Elektronenstrahlung eingesetzt wird, einen ersten, organischen Korrosionsinhibitor sowie einen Gesamtgehalt an Additiven im Bereich von 0,05 bis 22 Gew.-% enthält, jeweils bezogen auf die Feststoffgehalte in Gew.-%.

Es sind Monomere und Oligomere, Oligomere und Polymere, Monomere und Polymere oder Monomere, Oligomere und Polymere in der Korrosionsschutzzusammensetzung enthalten, wobei der Anteil an derartigen Verbindungen, die anionisch, kationisch oder/und radikalisch härtbar sind, insbesondere mindestens 40 Gew.-% beträgt, besonders bevorzugt mindestens 44 Gew.-%, ganz besonders bevorzugt mindestens 48 Gew.-%, vor allem bevorzugt mindestens 52 Gew.-%, insbesondere mindestens 56 Gew.-% bzw. insbesondere bis maximal 92 Gew.-%, besonders bevorzugt maximal 88 Gew.-%, ganz besonders bevorzugt maximal 84 Gew.-%, vor allem bevorzugt maximal 80 Gew.-%, insbesondere maximal 76 Gew.-%. Der Anteil an derartigen Verbindungen einschließlich Photoinitiatoren, die anionisch, kationisch oder/und radikalisch härtbar bzw. härtend sind, beträgt insbesondere mindestens 45 Gew.-%, besonders bevorzugt mindestens 50 Gew.-%, ganz besonders bevorzugt mindestens 55 Gew.-%, vor allem bevorzugt mindestens 60 Gew.-% bzw. insbesondere bis maximal 99 Gew.-%, besonders bevorzugt maximal 94 Gew.-%, ganz besonders bevorzugt maximal 88 Gew.-%, vor allem bevorzugt maximal 82 Gew.-%.

Das erfindungsgemäße Verfahren bzw. die erfindungsgemäße Korrosionsschutzzusammensetzung kann auch dadurch gekennzeichnet sein, dass der Korrosionsschutzzusammensetzung mindestens zwei Komponenten ausgewählt aus der Gruppe von Monomeren, Oligomeren und Polymeren zugesetzt werden, die zumindest teilweise anionisch, kationisch oder/und radikalisch härtbar sind, wobei der Gehalt an Monomeren im Bereich von 0 bis 60 Gew.-%, der Gehalt an Oligomeren im Bereich von 0 bis 60 Gew.-% und ggf. auch ein Polymer-Gehalt erforderlich ist, wobei der Gehalt an Polymeren im Bereich von 10 bis 70 Gew.-% liegen kann, wobei einerseits zumindest ein Monomer oder/und zumindest ein Oligomer sowie in anderen Ausführungsformen auch zumindest ein Polymer anwesend ist. Das Molekulargewicht der zugesetzten Monomere liegt oft im Bereich bis zu 500, vorteilhafterweise im Bereich von 100 bis zu 350. Das Molekulargewicht der Oligomere liegt vorteilhafterweise im Bereich von 300 bis zu 20000. Besonders bevorzugt liegt der Gehalt an Monomeren im Bereich von 1 bis 58 Gew.-%, ganz besonders bevorzugt bei mehr als 16 bzw. bei weniger als 52 Gew.-%, insbesondere bei mehr als 22 bzw. bei weniger als 44 Gew.-%; besonders bevorzugt liegt der Gehalt an Oligomeren im Bereich von 1 bis 58 Gew.-%, ganz besonders bevorzugt bei mehr als 16 bzw. bei weniger als 52 Gew.-%, insbesondere bei mehr als 22 bzw. bei weniger als 44 Gew.-%; besonders bevorzugt liegt der Gehalt an Polymeren im Bereich von 15 bis 60 Gew.-%, ganz besonders bevorzugt bei mehr als 20 bzw. bei weniger als 52 Gew.-%, insbesondere bei mehr als 25 bzw. bei weniger als 44 Gew.-%. Vorzugsweise sind - soweit vorhanden - zumindest einzelne Verbindungen aus jeder der drei Komponenten Monomere, Oligomere und Polymere anionisch, kationisch oder/und radikalisch polymerisierbar, besonders bevorzugt sind alle Verbindungen dieser Komponenten radikalisch polymerisierbar, wenn keine chemische Nachvernetzung oder/und keine kationische Polymerisation erfolgen soll.

Bei dem erfindungsgemäßen Verfahren kann der Korrosionsschutzzusammensetzung vorzugsweise mindestens ein Basis-Polymer zugesetzt werden auf Basis von Acrylat, Epoxid, Methacrylat, Polyester, Polyurethan oder/und deren Mischpolymerisaten, insbesondere Epoxyacrylat, Polyesteracrylat, Urethanacrylat oder/und deren Gemische unterschiedlicher Basischemie oder/und unterschiedlicher Molekulargewichte. Das Basis-Polymer dient im Gegensatz zu dem ggf. modifizierten Elastifizierungsharz und dem haftungsvermittelnden Polymer zur Bereitstellung einer guten polymeren Korrosionsschutzbasis. Alle Polymere, die im Rahmen dieser Anmeldung nicht als ggf. modifiziertes Elastifizierungsharz und nicht als haftungsvermittelndes Polymer bezeichnet werden, werden im Rahmen dieser Anmeldung als Basis-Polymere bezeichnet. Das Basis-Polymer kann gegebenenfalls aliphatisch modifiziert und gegebenenfalls dadurch flexibler sein. Es ist bevorzugt, dass alle eingesetzten Oligomere und Polymere, ggf. sogar einschließlich der zugesetzten Monomere, nicht zur Versprödung neigen. Bei der chemischen Vernetzung auf anionischem, kationischem, radikalischem oder/und thermischem Wege kann das Basis-Polymer u.a. mit Monomeren, Oligomeren oder/und Polymeren bzw. mit Photoinitiatoren oder/und Härtern reagieren. Es kann in bestimmten Monomeren, Oligomeren oder/und Polymeren gelöst werden. Es ist vorteilhaft, einen Gesamtgehalt an Basispolymer(en) im Bereich von 5 bis 50 Gew.-% zuzusetzen, insbesondere mindestens 15 Gew.% bzw. höchstens 42 Gew.-%, vor allem mindestens 22 Gew.-% bzw. höchstens 34 Gew.-%, einzusetzen. Die Monomere, Oligomere oder/und Polymere sind u.U. vorteilhafterweise zumindest mit einem geringen Anteil copolymerisierbar oder/und copolymerisiert.

Die Säurezahlen der zugesetzten Monomere, Oligiomere oder/und Polymere liegen insbesondere im Bereich von 1 bis 5 mg/g KOH, gemessen nach DIN 53402. Die pH-Werte der zugesetzten Monomere, Oligiomere oder/und Polymere liegen insbesondere im Bereich von 4 bis 9, besonders bevorzugt im Bereich von 5 bis 8.

Das erfindungsgemäße Verfahren kann auch dadurch charakterisiert sein, dass der Korrosionsschutzzusammensetzung Monomere oder/und Oligomere zugesetzt werden auf Basis von ungesättigten, ggf. aliphatischen oder/und aromatischen Verbindungen wie z.B. auf Basis ungesättigter aliphatischer Acrylate. Insbesondere vorteilhaft sind dabei mono-, di- oder/und tri-funktionelle Monomere oder/und Oligomere, vor allem aber monofunktionelle Verbindungen. Bei der Auswahl von besonders geeigneten Monomeren, Oligomeren oder/und Polymeren kann darauf geachtet werden, dass bei der Vernetzung dieser Komponenten eine mittelgroße Vernetzungsdichte und eine enge Verteilung mittelgroßer Kettenlängen erzielt wird. Überraschenderweise gelang es, hierdurch in einer Optimierung einerseits eine außerordentlich hohe Flexibilität und eine sehr gute Haftung auf dem metallischen Substrat sowie andererseits zugleich auch eine sehr hohe Chemikalienbeständigkeit zu erreichen. Denn normalerweise können entweder die Flexibilität und die Haftung oder die Chemikalienbeständigkeit hochwertig eingestellt werden. Mono-funktionelle Verbindungen vernetzen weitmaschiger, ohne mögliche Bruchstellen im Netzwerk auszubilden. Die Mono-Funktionalität kann vielfach die Flexibilität durch erhöhte Netzbogenlänge erhöhen und gegebenenfalls die Vernetzungsdichte senken. Vorzugsweise liegt der Gesamtgehalt an mono-funktionellen Monomeren oder/und mono-funktionellen Oligomeren wie z.B. Isobornylacrylat oder/und Isobornylmethacrylat in einem Bereich von 3 bis 58 Gew.-%, besonders bevorzugt bei mindestens 12 bzw. bei weniger als 43 Gew.-%, ganz besonders bevorzugt bei mindestens 18 bzw. bei weniger als 40 Gew.-%. Insbesondere beträgt der Gehalt an Isobornylacrylat oder/und Isobornylmethacrylat 16 bis 45 Gew.-%, vor allem 28 bis 42 Gew.-%. Mono-funktionelle Verbindungen sind besonders bevorzugt, weil diese die Elastizität meistens nicht negativ beeinflussen. Di-funktionelle Verbindungen wie z.B. 2-Ethylhexylacrylat oder/und Dipropylenglycoldiacrylat sind üblicherweise gute Lösemittel für Polymere und eignen sich daher, um die Viskosität von Systemen, die weitgehend oder gänzlich frei sind von Wasser oder/und organischen Lösemitteln, einzustellen. Tri-funktionelle Verbindungen wie z.B. Hexandioldicylacrylat, Tripropylenglycoldiacrylat, Trimethylolpropanformalacrylat oder/und Trimethylolpropanacrylat bedingen eine besonders hohe Reaktivität, die insbesondere für schnelle Bandbeschichtungen von Bedeutung sein kann, und eine besonders hohe Härte. Vorzugsweise liegt der Gesamtgehalt an difunktionellen Monomeren oder/und di-funktionellen Oligomeren, soweit welche verwendet werden, im Bereich von 3 bis 30 Gew.-%, besonders bevorzugt bei mindestens 6 bzw. bei weniger als 22 Gew.-%, ganz besonders bevorzugt bei mindestens 12 bzw. bei weniger als 16 Gew.-%.

Vorzugsweise beträgt der Anteil an mono-funktionellen oder/und difunktionellen monomeren oder/und oligomeren Verbindungen in der Korrosionsschutzzusammensetzung, die anionisch, kationisch oder/und radikalisch härtbar sind, insbesondere mindestens 10 Gew.-%, besonders bevorzugt mindestens 20 Gew.-%, ganz besonders bevorzugt mindestens 30 Gew.-%, vor allem bevorzugt mindestens 35 Gew.-%, insbesondere mindestens 40 Gew.-%, speziell mindestens 42 Gew.-% bzw. insbesondere bis zu 62 Gew.%, besonders bevorzugt bis zu 56 Gew.-%, ganz besonders bevorzugt bis zu 50 Gew.-%.

Vorzugsweise beträgt der Anteil an polymeren Verbindungen in der Korrosionsschutzzusammensetzung, die anionisch, kationisch oder/und radikalisch härtbar sind, mindestens 20 Gew.-%, besonders bevorzugt mindestens 24 Gew.-%, ganz besonders bevorzugt mindestens 28 Gew.-%, vor allem bevorzugt mindestens 30 Gew.-%, insbesondere mindestens 32 Gew-% bzw. insbesondere bis zu 62 Gew.-%, besonders bevorzugt bis zu 56 Gew.-%, ganz besonders bevorzugt bis zu 50 Gew.-%.

Der Gehalt des mindestens einen mono-funktionellen Monomers oder/und mindestens einen mono-funktionellen Oligomers beträgt vorzugsweise 1 bis 66 Gew.-%, besonders bevorzugt 10 bis 58 Gew.-%, ganz besonders bevorzugt mindestens 20 Gew.-% bzw. bis zu 52 Gew.-%, insbesondere mindestens 28 Gew.-% bzw. bis zu 48 Gew.-%, vor allem mindestens 34 Gew.-% bzw. bis zu 44 Gew.-%.

Das erfindungsgemäße Verfahren kann auch dadurch gekennzeichnet sein, dass der Korrosionsschutzzusammensetzung mindestens ein anionisch, kationisch oder/und radikalisch polymerisierbares Monomer oder/und Oligomer zugesetzt wird ausgewählt aus der Gruppe von Verbindungen auf Basis von Acrylat oder/und Methacrylat, vorzugsweise solche auf Basis von Benzyl, Butyl, Diol, Diacrylat, Ethyl, Formalacrylat, Glycol, Hexyl, Isobornyl, Methyl, Propyl oder/und Styrol, insbesondere solche ausgewählt aus der Gruppe von Butanedioldiacrylat, Diethylenglycoldiacrylat DEGDA, Dipropylenglycoldiacrylat DPGDA, 2-Ethylhexylacrylat EHA, Hexandioldicylacrylat HDDA, Hydroxypropylmethacrylat HPMA, Isobornylacrylat IBOA, Isobornylmethacrylat IBOMA, Polyethylendiacrylat, Triethylolpropanformalacrylat, Trimethylpropantriacrylat TMPTA, Trimethylolpropanformalacrylat TMPFA, Triethylolpropanacrylat, Trimethylolpropanacrylat TMPA und Tripropylenglycoldiacrylat TPGDA, ganz besonders bevorzugt solche ausgewählt aus der Gruppe von Verbindungen auf Basis von Isobornyl. IBOA und IBOMA sind bevorzugt für besonders flexible Beschichtungen.

Bei dem erfindungsgemäßen Verfahren kann der Korrosionsschutzzusammensetzung zusätzlich mindestens ein Elastifizierungsharz oder/und mindestens ein modifiziertes Elastifizierungsharz als Oligomere oder/und Polymere zugesetzt werden, insbesondere mindestens eines auf Basis von ungesättigten aliphatischen Polymeren wie z.B. solchen auf Basis von Acrylat, Methacrylat, Polyester oder/und Polyurethan, insbesondere auf Basis von Acrylat, Methacrylat oder/und Polyurethan. Es kann in mindestens einem Monomer oder/und Oligomer gelöst sein. Sie erhalten dadurch eine für die Verarbeitung günstige Viskosität. Ein anionisch, kationisch oder/und radikalisch polymerisierbares, ggf. modifiziertes Elastifizierungsharz kann wesentlich helfen, einen besonders flexiblen Trockenfilm zu erzeugen. Das ggf. modifizierte Elastifizierungsharz zeichnet sich vorzugsweise dadurch aus, dass es bei Verwendung ohne Zusatz weiterer Stoffe außer mindestens einem Photoinitiator und ggf. mindestens einem Monomer zum Lösen des E-lastifizierungsharzes einen gehärteten Überzug ergibt, der eine besonders hohe Flexibilität bestimmt als Reißdehnung aufweist, insbesondere eine Reißdehnung von jeweils mindestens 200, 250, 300, 350 oder 400 % der Ausgangslänge. Die Modifizierung kann z.B. mit Acryl-Gruppen erfolgen. Daher ist es vorteilhaft, hiervon einen Gesamtgehalt im Bereich von 0,1 bis 30 Gew.-% zuzusetzen, insbesondere mindestens 0,8 Gew.-% bzw. höchstens 22 Gew.-%, besonders bevorzugt mindestens 1,5 Gew.-% bzw. höchstens 15 Gew.-%, ganz besonders bevorzugt mindestens 2 Gew.-% bzw. höchstens 8 Gew.-%.

Bei dem erfindungsgemäßen Verfahren kann die Korrosionsschutzzusammensetzung bezüglich der Doppelbindungen der Oligomere oder/und Polymere und des Gehalts an Monomeren, Oligomeren oder/und Polymeren sowie bezüglich der Dauer, Intensität und Wellenlänge der aktinischen Strahlung so ausgewählt werden, dass - insbesondere mit Monomeren, Oligomeren oder/und Polymeren, die Doppelbindungen oder/und ungesättigte Gruppen aufweisen - ein polymeres Netzwerk von mittelgroßer Netzbogenlänge gebildet wird von gleichzeitig hoher Flexibilität und hoher Chemikalienbeständigkeit, so dass der gebildete und vernetzte Überzug einen T-Bend-Flexibilität von mindestens T ≤ 2, insbesondere T ≤ 1, aufweist.

Bei dem erfindungsgemäßen Verfahren kann der Korrosionsschutzzusammensetzung vorteilhafterweise mindestens ein Photoinitiator zur radikalischen Vernetzung auf Basis von Verbindungen ausgewählt aus der Gruppe von Alkylbenzoylformaten, Aminoketonen, Benzoinethern, Benzophenonen, Dimethylketalen, Glyoxylaten, Hydroxyketonen, Hydroxyphenonen, Isopropylethern, Metallocenen, organischen Jod-Verbindungen, Phenylketonen, Phenylpropanen und Phosphinoxiden oder/und mindestens ein Photoinitiator zur anionischen oder/und kationischen Vernetzung auf Basis von Verbindungen ausgewählt aus der Gruppe von Protonensäuren, Lewis-Säuren bzw. Friedel-Crafts-Katalysatoren und Carboniumionensalzen - insbesondere mindestens eine Dispersion oder/und Lösung - sowie gegebenenfalls mindestens ein Vernetzungsmittel für eine chemische Nachvernetzung, insbesondere mindestens ein verkappter Härter, zugesetzt wird. Die Vernetzungsmittel sind vor allem solche auf Basis von Isocyanat, Isocyanurat, Melaminharz oder/und Verbindungen, die Isocyanat bzw. Isocyanurat bei erhöhter Temperatur freisetzen können, wie z.B. TDI, MDI, HDMI oder/und HDI. Diese können z.B. auf der Basis von 2,4- bzw. 2,6-Toluoldiisocyanat (TDI), 4,4'-Methylendi(phenyl)isocyanat (MDI) oder Hexamethylendiisocyanat (HDI) beruhen. Grundsätzlich geeignet als Photoinitiatoren sind für die radikalische Vernetzung Verbindungen, die bei Einwirkung von aktinischer Strahlung freie Radikale bilden. Für einen außerordentlich hochwertigen Korrosionsschutzüberzug, wie er im Rahmen dieser Erfindung vorgeschlagen wird, empfiehlt es sich, insbesondere wenn am Band mit einer Geschwindigkeit von mehr als 40 m/min beschichtet werden soll, besonders reaktive Photoinitiatoren einzusetzen, um in sehr kurzer Zeit eine ausreichende anionische, kationische oder/und radikalische Polymerisation zu gewährleisten. Von einer ausreichenden anionischen, kationischen oder/und radikalischen Polymerisation kann insbesondere dann gesprochen werden, wenn bei der Prüfung der Lösemittelbeständigkeit mehr als 60 MEK-Zyklen erfolgreich durchstanden werden.

Für den Fall der chemischen Nachvernetzung wird der Korrosionsschutzzusammensetzung auch mindestens eine nachvernetzende Verbindung wie z.B. mindestens ein ETL-Bindemittel, besonders bevorzugt mindestens eine wasserlösliche oder/und wasserdispergierbare polymerisierbare nachvernetzende Verbindung zugesetzt, um eine anionische, kationische oder/und radikalische Härtung und anschließend oder/und später im Zusammenwirken mit mindestens einem Härter eine chemische Nachvernetzung zu ermöglichen, die vorzugsweise durch Erhitzen eingeleitet oder/und verstärkt wird. Der Gesamtgehalt an der mindestens einen nachvernetzenden Verbindung kann insbesondere 0,3 bis 30 Gew.-% betragen bezogen auf die Trockensubstanz. Vorzugsweise liegt ihr Gesamtgehalt im Bereich von 1 bis 25 Gew.-%, besonders bevorzugt im Bereich von 1,5 bis 20 Gew.-%, ganz besonders bevorzugt im Bereich von 1,8 bis 15 Gew.-%, vor allem mindestens 2 Gew.-% bzw. bis zu 9 Gew.-%. Daher ist es möglich, nur einen Teil der Vernetzung z.B. durch UV-Härtung zu bewirken und danach eine allmähliche, sich ggf. über etwa 12 Tage erstreckende Nachvernetzung auszulösen. Die Nachvernetzung kann sich bei Raumtemperatur über einige Tage erstrecken und kann durch erhöhte Temperatur oder/und in Gegenwart eines Katalysators für die nachvernetzende Verbindung wie z.B. Dibutylzinnlaurat (DBTL) beschleunigt werden. Die Nachvernetzung kann bei Anwesenheit derartiger Bindemittel bei Raumtemperatur langsam erfolgen und zur weiteren Polymerisation beitragen. Bei erhöhter Temperatur erfolgt eine stärkere und schnellere Nachvernetzung. Falls jedoch verkappte Bindemittel eingesetzt werden, muß die Verkappung zuerst thermisch bei etwa mindestens 80 °C chemisch aufgebrochen werden, bevor die thermische Vernetzung erfolgen kann. Somit ist es mit verkappten nachvernetzenden Verbindungen möglich, die weitere Aushärtung zielstrebig zu einem späteren Zeitpunkt zu starten, soweit nicht vorher erhöhte Temperaturbelastungen auftreten. Beispiele für bevorzugte nachvernetzende Verbindungen umfassen Isocyanate und Isocyanurate, die üblicherweise als Härter bzw. Vernetzer wirken. Diese können z.B. auf der Basis von 2,4- bzw. 2,6-Toluoldiisocyanat (TDI), 4,4'-Methylendi(phenyl)isocyanat (MDI) oder Hexamethylendiisocyanat (HDI) beruhen. Vorzugsweise werden Isocyanate und Isocyanurate auf Basis von HDI oder/und TDI verwendet. Die nachvernetzenden Verbindungen reagieren mit den freien OH- und Polyol-Gruppen des UV-härtenden Harzes unter Bildung von Polyharnstoffen, die bekanntlich sehr beständige Verbindungen sind, und verwandten chemischen Verbindungen.

Als Vernetzungsmittel für eine chemische Nachvernetzung eignen sich insbesondere aliphatische oder/und aromatische Isocyanate bzw. Isocyanurate, im Falle der verkappten Härter insbesondere aliphatische oder/und aromatische Isocyanate bzw. Isocyanurate. Der Gehalt des mindestens einen, ggf. verkappten, Härters für die chemische Nachvernetzung beträgt vorzugsweise 0,8 bis 9 Gew.-%, besonders bevorzugt 1,2 bis 6 Gew.-%, ganz besonders bevorzugt mindestens 1,5 Gew.-% bzw. bis zu 4 Gew.-%, insbesondere mindestens 1,8 Gew.-% bzw. bis zu 3,6 Gew.-%.

Das Verhältnis von allen Bindemitteln ohne Vernetzungsmittel zu allen Vernetzungsmitteln zur chemischen Vernetzung und Nachvernetzung einschließlich Photoinitiatoren zur anionischen, kationischen oder/und radikalischen Vernetzung beträgt vorzugsweise 60 : 40 bis 92 : 8, besonders bevorzugt 65 : 35 bis 88 : 12, besonders bevorzugt mindestens 70 : 30 bzw. bis zu 85 : 15.

Das Verhältnis von allen Bindemitteln ohne Vernetzungsmittel zu allen Vernetzungsmitteln zur chemischen Nachvernetzung beträgt vorzugsweise 80 : 20 bis 95 : 5, besonders bevorzugt 85 : 15 bis 92 : 8, besonders bevorzugt mindestens 88 : 12 bzw. bis zu 90 : 10.

Das Verhältnis von allen Basispolymeren zu allen Elastifizierungsharzen einschließlich modifizierten Elastifizierungsharzen beträgt vorzugsweise 80 : 20 bis 95 : 5, besonders bevorzugt 82 : 18 bis 92 : 8, besonders bevorzugt mindestens 6 : 1 bzw. bis zu 8 : 1.

Das Verhältnis von allen Basispolymeren zu allen anionisch, kationisch oder/und radikalisch härtbaren Monomeren und Oligomeren beträgt vorzugsweise 90 : 10 bis 35 : 65, besonders bevorzugt 80 : 20 bis 45 : 55, besonders bevorzugt mindestens 45 : 55 bzw. bis zu 60 : 40.

Das Verhältnis von allen anionisch, kationisch oder/und radikalisch härtbaren Polymeren ohne Vernetzungsmittel zu allen anionisch, kationisch oder/und radikalisch härtbaren Monomeren und Oligomeren ohne Vernetzungsmittel beträgt vorzugsweise 25 : 75 bis 80 : 20, besonders bevorzugt 32 : 68 bis 65 : 35, besonders bevorzugt mindestens 40 : 60 bzw. bis zu 50 : 50.

Bei dem erfindungsgemäßen Verfahren kann der Korrosionsschutzzusammensetzung vorzugsweise mindestens ein erster, organischer Korrosionsinhibitor zugesetzt werden ausgewählt aus der Gruppe von Verbindungen auf Basis von Aminen, Derivaten einer organischen Säure wie z.B. Dicarbonsäure-Derivaten, Thiolen und leitfähigen Polymeren, insbesondere auf Basis von Bernsteinsäure-Derivaten, Ethylmorpholin-Derivaten, Polyaminfettsäure-Derivaten oder/und Triazol-Derivaten. Dieser Inhibitor kann mindestens ein Alkanolamin, vorzugsweise ein langkettiges Alkanolamin, mindestens ein leitfähiges Polymer z.B. auf Basis von Polyanilin oder/und mindestens ein Thiol sein. Er ist vorzugsweise bei Raumtemperatur nicht leichtflüchtig. Ferner kann es vorteilhaft sein, wenn er in Wasser gut löslich oder/und in Wasser gut dispergierbar ist, insbesondere mit mehr als 0,5 g/L. Besonders bevorzugt sind u.a. Alkylaminoethanole wie Dimethylaminoethanol bzw. Komplexe auf Basis von einem TPA-Amin wie N-Ethylmorpholin-Komplex mit 4-Methyl-γ-oxo-benzinbutansäure. Der erste organische Korrosionsinhibitor kann zugesetzt werden, um eine stärkere Korrosionsinhibition zu bewirken oder noch weiter zu verstärken. Er ist besonders vorteilhaft, wenn unverzinkte Stahloberflächen, insbesondere kaltgewalzter Stahl (CRS), beschichtet werden sollen.

Der Gehalt des mindestens einen ersten, organischen Korrosionsinhibitors beträgt vorzugsweise 0,1 bis 5,5 Gew.-%, besonders bevorzugt 0,2 bis 5 Gew.-%, ganz besonders bevorzugt mindestens 0,3 Gew.-% bzw. bis zu 4,5 Gew.-%, insbesondere mindestens 0,4 Gew.-% bzw. bis zu 4 Gew.-%, vor allem mindestens 0,45 Gew.-% bzw. bis zu 2,5 Gew.-%, vor allem weniger als 2 oder weniger als 1,8 Gew.-%.

Bei dem erfindungsgemäßen Verfahren kann der Korrosionsschutzzusammensetzung vorteilhafterweise mindestens ein weiterer, organischer oder/und anorganischer Korrosionsinhibitor zugesetzt werden, wobei der mindestens eine anorganische Korrosionsinhibitor ausgewählt sein kann aus der Gruppe auf Basis von Korrosionsschutzpigmenten und von Verbindungen auf Basis von Titan, Hafnium, Zirkonium, Carbonät oder/und Ammoniumcarbonat, wobei die Korrosionsschutzpigmente vorzugsweise solche sind auf Basis von Kieselsäure(n), Oxid(en) oder/und Silicat(en) wie z.B. Erdalkali-haltigen Korrosionsschutzpigment(en), insbesondere auf Basis von Kalzium-modifiziertem Kieselsäure- bzw. Silicat-Pigment. Der Gehalt des mindestens einen weiteren, organischen oder/und anorganischen Korrosionsinhibitors beträgt jeweils vorzugsweise 0,1 bis 16 Gew.-%, besonders bevorzugt 1 bis 12 Gew.-%, ganz besonders bevorzugt mindestens 3 Gew.-% bzw. bis zu 7,5 Gew.-%, insbesondere mindestens 4,5 Gew.-% bzw. bis zu 6,5 Gew.-%. Silicatische Pigmente sind besonders bevorzugt, wenn sie die Wasserstoffionen im Beschichtungsgemisch puffern und dadurch erst keine Korrosion beginnen lassen.

Das erfindungsgemäße Beschichtungsgemisch kann vorzugsweise mindestens ein Korrosionsschutzpigment enthalten, wobei der Gesamtgehalt an Korrosionsschutzpigment in manchen Ausführungsformen vorzugsweise im Bereich von 0,1 bis 15 Gew.-% liegen kann, besonders bevorzugt im Bereich von 0,5 bis 10 Gew.-%, ganz besonders bevorzugt im Bereich von 1,2 bis 8 Gew.-%, bezogen auf den Feststoffgehalt. In anderen Ausführungsformen liegt der Gesamtgehalt an Korrosionsschutzpigment vorzugsweise im Bereich von 0,1 bis 8 Gew.-% liegen kann, besonders bevorzugt im Bereich von 0,5 bis 6,5 Gew.-%, ganz besonders bevorzugt im Bereich von 1 bis 5 Gew.-%. Als Korrosionsschutzpigmente können insbesondere solche auf Basis von jeweils mindestens einem Oxid, Phosphat oder/und Silicat eingesetzt werden. Modifizierte Kieselsäurepigmente und silicatische Pigmente, häufig als kolloidale Pigmente, sind oft besonders bevorzugt, weil sie die Wasserstoffionen im Beschichtungsgemisch puffern können und dadurch noch weiter verzögert Korrosion beginnen lassen.

Die erfindungsgemäße Korrosionsschutzzusammensetzung enthält vorzugsweise mindestens ein Pigment wie z.B. mindestens ein Farbpigment oder/und mindestens ein Korrosionsschutzpigment, wobei die Korrosionsschutzpigmente im Rahmen dieser Anmeldung den Korrosionsinhibitoren zugeordnet werden und wobei die übrigen Pigmente als Additive gewertet werden.

Darüber hinaus sollte das erfindungsgemäße Beschichtungsgemisch in einer bevorzugten Ausgestaltung keinen oder einen. möglichst geringen Gehalt - zusammen vorzugsweise nicht mehr als 5 Gew.-% - an Pigment mit einer stärkeren oder starken Absorption im Spektralbereich der gewählten aktinischen Strahlung oder/und Lichtart, die zur anionischen, kationischen oder/und radikalischen Vernetzung eingesetzt wird, insbesondere einer UV-Strahlung, aufweisen. In einer anderen Ausgestaltung kann das erfindungsgemäße Beschichtungsgemisch vorzugsweise bis zu 20 Gew.-% an Farb-oder/und Weißpigmenten enthalten, wobei deren Absorption insbesondere vorwiegend oder weitgehend außerhalb der einzustrahlenden Wellenlänge bei anionischer, kationischer oder/und radikalischer Härtung liegt; hierbei kann es notwendig werden, mit deutlich erhöhter Energie einzustrahlen, wenn die Reflektion der Strahlung dann deutlich höher liegen sollte. Vorzugsweise liegt der Gesamtgehalt der Pigmente ohne Korrosionsschutzpigmente jedoch im Bereich von 1 bis 12 Gew.-%, besonders bevorzugt im Bereich von 2 bis 10 Gew.-%, ganz besonders bevorzugt im Bereich von 3 bis 8 Gew.-%. Denn es ist oft nur der Zusatz eines vergleichsweise geringen Gehalts an Korrosionsschutzpigment bzw. anderem Pigment vorteilhaft. In etlichen Fällen stört darüber hinaus auch die für das Auge sichtbare Farbgebung bzw. Absorption vieler Pigmente. Andererseits ist die erfindungsgemäße Korrosionsschutzzusammensetzung hervorragend geeignet, auch andere Arten Pigmente als Korrosionsschutzpigmente zuzusetzen, z.B. Farbpigmente oder Hartstoffe wie z.B. isometrische bzw. mehr oder minder kugelförmige Pigmente bzw. Hohlpartikelpulver.

Der Gesamtgehalt des mindestens einen Additivs beträgt vorzugsweise 1,2 bis 12,5 Gew.-%, besonders bevorzugt 1,8 bis 10 Gew.-%, ganz besonders bevorzugt mindestens 2,5 Gew.-% bzw. bis zu 9 Gew.-%, insbesondere mindestens 3,5 Gew.-% bzw. bis zu 8 Gew.-%. Allerdings kann es bei einem hohen Gehalt von Farb- oder/und Weißpigmenten zu einer Verschiebung dieser Bereiche um jeweils 10 oder sogar um 15 oder 20 Gew.-% absolut kommen. Dabei kann der Gehalt des mindestens einen Additivs vorzugsweise 10 bis 32,5 Gew.-% betragen, besonders bevorzugt 13 bis 30 Gew.-%, ganz besonders bevorzugt mindestens 16 Gew.-% bzw. bis zu 28 Gew.-%, insbesondere mindestens 18 Gew.-% bzw. bis zu 26 Gew.-%.

Das erfindungsgemäße Beschichtungsgemisch kann mindestens eines der nachfolgend genannten Additive enthalten wie z.B. Benetzungsmittel wie z.B. auf Basis von Lecithinöl, Silan(en), Siloxan(en), anderem Öl oder/und Entschäumer wie z.B. auf Basis von Mineralöl(en), Polysiloxan(en) oder/und deren Derivaten wie z.B. Copolymeren, Oberflächenadditive zur Erhöhung der Kratzfestigkeit wie z.B. auf Basis von Silan(en), Siloxan(en) oder/und Wachsdispersion(en), Additive zur Untergrundbenetzung wie z.B. auf Basis von Lecithinöl, Silan(en), Siloxan(en), anderem Öl oder/und Haftvermittler wie z.B. zur Haftung auf metallischem Untergrund wie z.B. auf Basis von organischen Phosphorsäureester(n), Komplexfluorid(en) oder/und Epoxid(en), Thixotropiehilfsmittel wie z.B. auf Basis von hochdispersem Silicat oder/und hochdispersem SiO₂, Additive zur Steigerung der Reaktivität (sogenannte Co-Initiatoren) wie z.B. solche, die Sauerstoff abfangen können und gleichzeitig Radikale ausbilden, wie z.B. auf Basis von tertiären Aminen. Ein Benetzungsmittel sorgt für eine homogene Benetzung zum Untergrund bzw. zur Überwindung der unterschiedlichen Oberflächenspannung zwischen verschiedenen Filmen. Ein Entschäumer dient dazu, dass möglichst keine Luftbläschen in der aufgebrachten Beschichtung eingeschlossen werden und somit keine Poren in ihr ausgebildet werden. Ein Verlaufsmittel hilft, dass eine homogene Oberfläche ausgebildet wird und insbesondere eine Walzstruktur oder/und ein Orange-Peel-Effekt vermieden wird. Bei Verwendung insbesondere von mindestens vier Arten bzw. Substanzen an Additiven oder wenn mehrere Arten Additive mit erhöhtem Gehalt zugesetzt werden, kann der Gesamtgehalt an allen Additiven insbesondere im Bereich von 0,05 bis 22 Gew.-% liegen bezogen auf den Feststoffgehalt. Vorzugsweise liegt ihr Gesamtgehalt im Bereich von 0,3 bis 20 Gew.-%, besonders bevorzugt im Bereich von mindestens 1 bzw. bis zu 17,5 Gew.-%, ganz besonders bevorzugt im Bereich von mindestens 2 bzw. bis zu 15 Gew.-%.

Das erfindungsgemäße Beschichtungsgemisch kann als Additiv(e) mindestens ein Gleitmittel wie z.B. mindestens eines auf Basis von Graphit, Polyethylen, Polypropylen wie auf Basis von Polyethylenoxid bzw. Polypropylenoxid, Polytetrafluorethylen (PTFE), anderen Arten an Wachsen enthalten, Silan, Siloxan wie Dimethylsiloxan oder/und deren Derivaten, insbesondere ausgewählt aus kristallinem Mikrowachs(en), Silan(en) oder/und Polysiloxan(en), wobei der Gesamtgehalt an Gleitmittel insbesondere im Bereich von 0,05 bis 5 Gew.-% liegen kann bezogen auf den Feststoffgehalt. Vorzugsweise liegt ihr Gesamtgehalt im Bereich von 0,2 bis 4 Gew.-%, besonders bevorzugt im Bereich von 0,4 bis 3 Gew.-%, ganz besonders bevorzugt im Bereich von 0,6 bis 2,5 Gew.-%, insbesondere 2 Gew.-%. Ein Zusatz von Gleitmittel ist bezüglich der Art und Menge der Gleitmittel so auszuwählen, dass die derart behandelten Oberflächen nachträglich ggf. auch bedruckt, überlackiert, verklebt bzw. anderweitig beschichtet.werden können.

Bei dem erfindungsgemäßen Verfahren kann der Korrosionsschutzzusammensetzung vorzugsweise zusätzlich mindestens ein haftungsvermittelndes Polymer zugesetzt werden, insbesondere mindestens eines auf Basis von Amin wie tertiärem Amin, Phosphorsäureestern oder/und anderen Phosphor enthaltenden Säuren wie Phosphonsäuren, insbesondere solche z.B. mit Polymeren auf Basis von Acrylat, Epoxid, Methacrylat, Polyester, Polyurethan oder/und deren Mischpolymerisaten bzw. als deren Mono-, Di- oder/und Triester. Daher ist es vorteilhaft, hiervon einen Gesamtgehalt im Bereich von 1 bis 20 Gew.-% zuzusetzen, insbesondere mindestens 7 Gew.-% bzw. höchstens 14 Gew.-%.

Bei dem erfindungsgemäßen Verfahren kann die Korrosionsschutzzusammensetzung als Additiv mindestens ein Pigment enthalten ausgewählt aus der Gruppe von Verbindungen auf Basis von Farbpigment, Metallpigment, Oxid, Phosphat, Phosphid, Phosphosilicat, Silicat, elektrisch leitfähigem Pigment und beschichtetem Pigment oder/und ausgewählt aus der Gruppe von Aluminium, Aluminiumlegierungen, Eisenlegierungen, Eisenhydroxid, Eisenoxid, Eisenphosphat, Eisenphosphid, Graphit, Kieselsäure, modifizierter Kieselsäure, ggf. modifiziertem Aluminium-, Erdalkali- bzw. Alumosilicat, unterstöchiometrischem elektrisch leitfähigen Oxid, Ruß, Zink und korrosionsbeständigerer Aluminium- oder/und Zink-haltiger Legierung.

Das erfindungsgemäße Beschichtungsgemisch und der daraus hergestellte Überzug sind vorzugsweise frei oder weitgehend frei von umweltschädlichem Chromat. Sie sind vorzugsweise frei oder weitgehend frei von Schwermetallen wie z.B. Chrom, Kobalt, Kupfer oder/und Nickel. Sie sind vielfach frei von farbgebenden Bestandteilen und werden dann nur einen schwachen oder keinen Farbton - auch als gehärteter polymerer Überzug - aufweisen. Es ist bevorzugt, einen möglichst farblosen, klaren oder zumindest transparenten polymeren Überzug zu erzeugen. Für bestimmte Einsatzzwecke kann es jedoch erwünscht sein, durch Farbstoffe oder/und Pigmente farbige Korrosionsschutzüberzüge zu erzeugen.

Bevorzugt enthält die Korrosionsschutzzusammensetzung folgende Gehalte, wobei nicht alle der aufgeführten Komponenten oder Gruppen von Verbindungen zugesetzt sein müssen:

| | | | | |
|---|---|---|---|---|
| a) | anionisch, kationisch oder/und radikalisch härtende Komponenten: | 60 | -98 | Gew.-% |
| | Basispolymer(e) | 20 | -40 | Gew.-% |
| | Elastifizierungsharz(e), ggf. modifiziert | 2 | -20 | Gew.-%, |
| | Monomer(e) und Oligomer(e) | 10 | -48 | Gew.-% |
| | davon mono-funkt. Monomere u. Olig. | 10 | -50 | Gew.-% |
| | davon di-funkt. Monomere u. Oligom. | 10 | -50 | Gew.-% |
| | davon tri-funkt. Monomere u. Oligom. | 10 | -50 | Gew.-% |
| | Photoinitiator(en) | 2 | -18 | Gew.-% |
| | Photoinitiator(en) z. anion./kation. Vern. | 2 | -18 | Gew.-% |
| b) | chemisch nachhärtende Komponenten: | 1 | -16 | Gew.-% |
| | nachvernetzende Verbindung(en) | 0,5 | - 8 | Gew.-% |
| | Härter | 0,5 | - 8 | Gew.-% |
| c) | Korrosionsinhibitoren: | 2 | -12 | Gew.-% |
| | erster organischer | 0,1 | - 3 | Gew.-% |
| | ggf. anorganische(r) | 0,5 | - 10 | Gew.-% |
| | davon ggf. Korrosionsschutzpigment(e) | 1 | - 10 | Gew.-% |
| | ggf. weitere(r) organische(r) | 0,1 | - 6 | Gew.-% |
| d) | Additive: | 1,5 | - 30 | Gew.-% |
| | Benetzungsmittel | 0,1 | - 1,5 | Gew.-% |
| | Entschäumer | 0,1 | - 1,5 | Gew.-% |
| | Gleitmittel | 0,1 | - 1,5 | Gew.-% |
| | haftungsvermittelndes Polymer | 3 | - 14 | Gew.-% |
| | Haftvermittler | 3 | - 14 | Gew.-% |
| | Pigmente, ohne Korrosionsschutzpigm. | 0,1 | - 14 | Gew.-% |
| | Thixotropiehilfsmittel | 0,1 | - 4 | Gew.-% |
| | Verlaufsmittel | 0,1 | - 2 | Gew.-% |
| | A. zur Steigerung der Kratzfestigkeit | 0,1 | - 1,5 | Gew.-% |
| | A. zur Steigerung der Reaktivität | 0,1 | - 4 | Gew.-% |
| | A. zur Untergrundbenetzung | 0,1 | - 1,5 | Gew.-% |
| e) | Lösemittel, soweit zugesetzt: | 0,01 | - 4 | Gew.-% |
| | Wasser | 0,01 | - 3 | Gew.-% |
| | organische(s) Lösemittel | 0,01 | - 3 | Gew.-%. |

Besonders bevorzugt enthält die Korrosionsschutzzusammensetzung folgende Gehalte, wobei nicht alle der aufgeführten Komponenten oder Gruppen von Verbindungen zugesetzt sein müssen:

| | | | | |
|---|---|---|---|---|
| a) | anionisch, kationisch oder/und radikalisch härtende Komponenten: | | | |
| | | 70 | - 97 | Gew.-% |
| | Basispolymer(e) | 25 | - 35 | Gew.-% |
| | Elastifizierungsharz(e), ggf. modifiziert | 3 | - 10 | Gew.-%, |
| | Monomer(e) und Oligomer(e) | 30 | - 45 | Gew.-% |
| | davon mono-funkt. Monomere u. Olig. | 20 | -45 | Gew.-% |
| | davon di-funkt. Monomere u. Oligom. | 10 | -45 | Gew.-% |
| | davon tri-funkt. Monomere u. Oligom. | 10 | -45 | Gew.-% |
| | Photoinitiator(en) | 4 | -14 | Gew.-% |
| | Photoinitiator(en) z. anion./kation. Vern. | 4 | -14 | Gew.-% |
| b) | chemisch nachhärtende Komponenten: | 3 | -12 | Gew.-% |
| | nachvernetzende Verbindung(en) | 1,5 | - 6 | Gew.-% |
| | Härter | 1,5 | - 6 | Gew.-% |
| c) | Korrosionsinhibitoren: | 5 | - 8 | Gew.-% |
| | erster organischer | 0,1 | - 1 | Gew.-% |
| | ggf. anorganische(r) | 1 | - 7 | Gew.-% |
| | davon ggf. Korrosionsschutzpigment(e) | 1 | - 7 | Gew.-% |
| | ggf. weitere(r) organische(r) | 0,1 | - 4 | Gew.-%. |

Die Aufgabe wird ferner gelöst mit einem organischen, anionisch, kationisch oder/und radikalisch gehärteten Korrosionsschutzüberzug auf einem metallischen Substrat, der eine Trockenfilmdicke im Bereich von 0,4 bis 20 µm aufweist und der auch dadurch gekennzeichnet sein kann,
a) dass er eine Flexibilität und Haftfestigkeit aufweist bei Auflagerung direkt auf einer metallischen Oberfläche, ohne dass eine Vorbehandlungsschicht zwischengeschaltet ist, von ≤ T3, insbesondere von ≤ T2 oder sogar von ≤ T1 - bestimmt über einen T-Bend-Test nach ECCA-Standard T7 bei Biegung über eine Druckluft-Abkantpresse an 8 µm dick organisch beschichteten, feuerverzinkten (=HDG-vorbeschichteten) Stahlblechen von 0,3 mm Dicke,
b) dass er bei Auflagerung direkt auf einer metallischen Oberfläche, ohne dass eine Vorbehandlungsschicht zwischengeschaltet ist, eine Haftfestigkeit aufweist von ≤ Gt 3, von ≤ Gt 2, von ≤ Gt 1 oder von Gt 0, bestimmt über einen Gitterschnitt-Test nach DIN EN 2409 (mit elektromotorischer Schneidvorrichtung Modell 430/II der Fa. Erichsen, Bürsten mit einer weichen Bürste entlang der Schnitte) und mit einem ruckartigen Abreißen eines fest angedrückten Klebebandes Tesa^{©} 4651 von der Gitterschnittfläche unter visueller Beurteilung der Gitterschnittfläche und ihrer Abplatzungen,
c) dass er bei Auflagerung direkt auf einer metallischen Oberfläche, ohne dass eine Vorbehandlungsschicht zwischengeschaltet ist, eine Korrosionsbeständigkeit aufweist geprüft als Unterwanderung an einem Ritz von ≤ 5 mm, ≤ 4 mm, ≤ 3 mm, ≤ 2 mm oder ≤ 1 mm insbesondere bestimmt im Salzsprühtest SS nach DIN 50021 bei 35 °C über mindestens 150 h oder über mindestens 200 h, vorzugsweise von mindestens 200h, von mindestens 250 h, von mindestens 300 h, von mindestens 350 h, von mindestens 400 h, von mindestens 450 h oder sogar von mindestens 500 h, wobei der Korrosionsschutzüberzug blasenfrei bleibt,
d) dass er eine einwandfreie Elastizität und Haftfestigkeit aufweist bei der Tiefungsprüfung nach DIN EN ISO 1520 mit einer Lack- und Farben-Prüfmaschine Modell 142-20 der Fa. Erichsen geprüft bei 20 mm Kugeldurchmesser mit einem Vortrieb im Bereich von 0,1 bis 0,3 mm/sec über mehr als 7 mm Tiefe, bis Fehler wie z.B. Risse auftreten;
e) dass er bei Auflagerung direkt auf einer metallischen Oberfläche, ohne dass eine Vorbehandlungsschicht zwischengeschaltet ist, abriebfreie und fehlerfreie Näpfchen bei einer Bestimmung der Näpfchentiefung (Näpfchenzug) nach Erichsen an einer Universal-Blech- und Band-Prüfmaschine 142-20 mit Tiefzieh-Näpfchen-Werkzeug der Fa. Erichsen bei einem Stempeldurchmesser von 33 mm und einer Preßgeschwindigkeit von 750 mm/min an Ronden von 60 mm Durchmesser aus erfindungsgemäß beschichteten metallischen Blechen aufweist,
f) dass er bei Auflagerung direkt auf einer metallischen Oberfläche, ohne dass eine Vorbehandlungsschicht zwischengeschaltet ist, eine Chemikalienbeständigkeit aufweist von mehr als 20 MEK-Zyklen, von mehr als 30 MEK-Zyklen, von mehr als 40 MEK-Zyklen, von mehr als 50 MEK-Zyklen, von mehr als 63 MEK-Zyklen oder von mehr als 76 MEK-Zyklen, ermittelt im MEK-Test mit Methyl-Ethyl-Keton nach ECCA-Standard T11 aufweist,
g) dass er eine Chemikalienbeständigkeit aufweist von mehr als 50 MEK-Zyklen, von mehr als 60 MEK-Zyklen, von mehr als 63 MEK-Zyklen, von mehr als 70 MEK-Zyklen, von mehr als 76 MEK-Zyklen, von mehr als 80 MEK-Zyklen, von mehr als 86 MEK-Zyklen, von mehr als 90 MEK-Zyklen, oder von mehr als 96 MEK-Zyklen, von mehr als 100 MEK-Zyklen, von mehr als 110 MEK-Zyklen, von mehr als 120 MEK-Zyklen oder von mehr als 130 MEK-Zyklen, ermittelt im MEK-Test mit Methyl-Ethyl-Keton nach ECCA-Standard T11 aufweist,
h) dass ein organischer gehärteter Korrosionsschutzüberzug auf einem metallischen Substrat, der eine Trockenfilmdicke im Bereich von 0,1 bis 20 µm oder von 0,4 bis 20 µm und eine Chemikalienbeständigkeit von mehr als 50 MEK-Zyklen aufweist - letzteres ermittelt im MEK-Test nach ECCA-Standard T11 mit Methyl-Ethyl-Keton - und dass dieser eine Elastizität und Haftfestigkeit aufweist bei der Tiefungsprüfung nach DIN EN ISO 1520 mit Kugeldruck von mindestens 6 mm, vorzugsweise von mindestens 6,5 mm, besonders bevorzugt von mindestens 7, 7,5 oder 8 mm, geprüft vorzugsweise bei einer Blechdicke von 0,75 mm bezüglich des einwandfreien Erscheinungsbildes, oder/und
i) dass er keine Versprödung über zusätzliche UV-Bestrahlungen aufweist bestimmt über den T-Bend-Test als Flexibilitätstest nach ECCA-Standard T7 vor und nach einer zusätzlichen zehnmaligen UV-Bestrahlung bei etwa 340 nm Wellenlänge und bei einer Leuchtdichte von jeweils etwa 600 mJ/cm².

Eine Chemikalienbeständigkeit von mehr als 20 MEK-Zyklen ist bereits als sehr hoch anzusehen. 20 MEK-Zyklen sind nach Kenntnis der Anmelderin bei derartigen chemischen Systemen, die jedoch deutlich mehr als insgesamt 5 Gew.-% Wasser oder/und organisches Lösemittel enthalten, nicht bekannt. 20 bis 100 MEK-Zyklen sind nur bei einer sehr hohen Reaktivität des chemischen Systems erzielbar. Als Anzeichen hierfür kann die Vernetzbarkeit und für diese die MEK-Zyklenzahl gelten. Die außerordentlich hohe Leistungsfähigkeit der erfindungsgemäßen Beschichtungen zeigt sich jedoch auch daran, dass hiermit nicht nur eine außerordentlich hohe Chemikalienbeständigkeit, sondern auch gleichzeitig in vielen Fällen eine sehr hohe Flexibilität und Haftfestigkeit erzielt wird. Ferner ist die erfindungsgemäße Beschichtung vielfach mit jedem thermisch härtenden Lacksystem überlackierbar. Besonders geeignet sind insbesondere farbige Lacke. Aufgrund der üblicherweise sehr hohen dauerhaften Korrosionsbeständigkeit eignet sich diese Beschichtung insbesondere für die Herstellung von lackierten Architekturanwendungen wie z.B. bei Baustählen.

Aufgrund der Verwendung der erfindungsgemäßen Korrosionsschutzzusammensetzung ist es möglich, nicht nur die mindestens eine Vorbehandlungsschicht, die heutzutage immer unter einer ersten Lackschicht oder lackartigen Schicht angewandt wird, einzusparen, sondern auch-die mindestens eine Spülung und die oft zusätzlich angewandte mindestens eine Nachspüllösung bzw. mindestens eine Trocknung wegzulassen, ohne eine Beeinträchtigung der Qualität zu erzielen. Die erfindungsgemäße Korrosionsschutzzusammensetzung ist erstaunlich kostengünstig.

Die erfindungsgemäß beschichteten Substrate können insbesondere verwendet werden in der Stahlindustrie, im Fahrzeugbau oder/und im Flugzeugbau, insbesondere in der Automobilserienfertigung, als Draht, Drahtwicklung, Drahtgeflecht, Blech, Verkleidung, Abschirmung, Karosserie oder Teil einer Karosserie, Teil eines Fahrzeugs, Anhängers, Wohnmobils oder Flugkörpers, Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder als Kleinteil wie z.B. eine Schraube, eine Mutter, ein Flansch, eine Feder oder ein Brillengestell.

Der erfindungsgemäß hergestellte Korrosionsschutzüberzug kann insbesondere verwendet werden als Schutzbeschichtung beim Umformen oder/und Fügen, als Korrosionsschutz von Flächen bzw. im Kanten-, Naht- oder/und Schweißnahtbereich, als Schutz anstelle einer Hohlraumversiegelung oder/und einer Nahtabdichtung, insbesondere für den Fahrzeugbau oder Flugzeugbau.

Es wurde außerdem unerwartet festgestellt, dass über die Kombination von verschiedenen Bindemitteln sowohl eine hohe Flexibilität, als auch gleichzeitig eine hohe Chemikalienbeständigkeit erreicht werden kann, die der fachkundigen Anmelderin weder aus der Praxis, noch aus der Literatur bekannt ist.

Darüber hinaus war es überraschend, dass es möglich ist, über die Auswahl der Photoinitiatoren für die kationische bzw. radikalische Vernetzung und der Monomere eine für diese organischen Beschichtungen sehr hohe Reaktivität eingestellt werden kann.

Weiterhin wurde überraschenderweise festgestellt, dass das für extrem hohe Korrosionsbeständigkeit günstige Verhältnis der organischen zu den anorganischen Korrosionsinhibitoren in der Korrosionsschutzzusammensetzung nicht wie erwartet im Bereich von etwa 1 : 1 zu etwa 2,5 : 1 lag, sondern im Bereich von 1 : 8 bis 1 : 20.

Die erfindungsgemäß beschichteten Stahlbleche, insbesondere solche, die am Band hergestellt worden waren, eigneten sich hervorragend, um zusammen mit dem dünnen erfindungsgemäßen Korrosionsschutzüberzug fehlerfrei z.B. zu Wellblech einschließlich der U-förmigen Abkantung am Rand des Wellblechs umgeformt werden zu können.

Der Gegenstand der vorliegenden Anmeldung betrifft auch organische Korrosionsschutzüberzüge im allgemeinen auf metallischen Substraten, wobei die Überzüge eine Trockenfilmdicke im Bereich von 0,4 bis 20 µm und eine Chemikalienbeständigkeit aufweisen von mehr als 100 MEK-Zyklen, ermittelt im MEK-Test nach ECCA-Standard T11 mit Methyl-Ethyl-Keton.

Diese Chemikalienbeständigkeit wird insbesondere erreicht bei einer Elastizität und Haftfestigkeit ermittelt bei der Tiefungsprüfung nach DIN EN ISO 1520 mit Kugeldruck von mindestens 6 mm.

### Beispiele:

Im folgenden werden einzelne ausgewählte Ausführungsformen beispielhaft beschrieben.

Es wurden vorwiegend Bindemittel eingesetzt, die in Form von Gemischen vorlagen. Zuerst wurden Bindemittel, Monomere, Korrosionsinhibitoren, Photoinitiatoren und Additive entsprechend den Beispielen in Tabelle 1 zusammengemischt. In den Beispielen (siehe Tabelle 1) dienen 1.a, 1.b und 1.d als Basispolymere, 1.c als Elastifizierungsharz, 1.e als Härter für die chemische Nachvernetzung, 2.a und 2.b als mono-funktionelle Monomere, 2.c bis 2.i als di- bzw. multi-funktionelle Monomere bzw. 3.a als Haftvermittler, 3.b und 3.c als Gleitmittel, 3.d als Benetzungsmittel oder/und 3.e als CoInitiator zur Steigerung der Reaktivität. Der dabei anfänglich zugesetzte Anteil der Monomere betrug jeweils nur 85 bis 90 Gew.-% der in Tabelle 1 genannten Gehalte. Dann wurden die Gemische in einer Perlmühle gemahlen. Die bereits feinteilig vorliegenden Feststoffe wurden dabei auf eine Feinheit von kleiner 10 µm gemahlen. Daraufhin wurden die restlichen Monomere (10 bis 15 Gew.-% des Gesamtmonomergehalts) zugesetzt. Schließlich wurde der Ansatz schnell gerührt und danach auf 40 µm gesiebt, um ggf. erfolgte Antrocknungen und Agglomerate zu entfernen. Der Wassergehalt betrug je Ansatz etwa 0,1 Gew.-% bzw. bis zu etwa 0,2 Gew.-%. Der Gehalt an organischem Lösemittel betrug 0 bzw. 0,05 Gew.-%. Eine ggf. gewünschte chemische Nachvernetzung wurde durch Erhitzen auf eine Temperatur von 140 °C PMT ausgelöst.

Für die Beispiele der Tabelle 1 wurden feuerverzinkte Stahlbleche von 0,3 mm Dicke verwendet, die nicht mit einer Vorbehandlungsschicht versehen waren. Das erfindungsgemäße Beschichtungsgemisch wurde durch Rakeln und am Laborcoater oder durch Spritzen in einer Naßfilmdicke von 7 bis 9 µm aufgetragen. Für das Spritzen wurde ein Düsendurchmesser von maximal 1 mm genutzt. Eine Trocknung der beschichteten Bleche war nicht erforderlich, da praktisch kein Lösemittel enthalten war. Der polymere Überzug wurde bei Raumtemperatur zweimal direkt nacheinander mit einer Hgdotierten UV-Lampe im Wellenlängenbereich zwischen 200 und 300 nm bei einer Leistung von 120 W/cm bei 5 m/min Bandgeschwindigkeit ausgehärtet, wobei eine Bestrahlung von ca. 15 cm in Bandrichtung erfolgte. Die so hergestellten Trockenfilme hatten eine Filmdicke im Bereich von 7,6 bis 8,4 µm.

Die Elastifizierungsharze lagen vorteilhafterweise bereits vorgelöst in IBOA oder/und IBOMA vor, wodurch eine sehr hohe Reißdehnung erzielt werden konnte. Die Reißdehnung wurde nach DIN 53504 an freien organischen gehärteten Filmen in einer Zuprüfmaschine eingespannt, gedehnt und bei Raumtemperatur gerissen, wobei die Dehnung im Augenblick des Reißens in % der Ausgangslänge gemessen wurde: Hierbei ergaben sich sogar Werte von mindestens 300 %, wenn zu dem vorgelösten Elastifizierungsharz nur ein Photoinitiator zugesetzt wurde und wenn dieses Gemisch aufgetragen und gehärtet wurde.

Die Zusammensetzung der erfindungsgemäßen Beschichtungsgemische wird in Tabelle 1 aufgeführt, die Viskositäten und die Eigenschaften der Beschichtungen finden sich in Tabelle 2. Bei diesen Versuchen wurden Varianten ohne, als auch eine mit einer zusätzlichen nachvernetzenden Verbindung getestet. Bei Parallelversuchen wurde auf gleichartig hergestellte Bleche zusätzlich ein industrieller Standard-Einbrennlack aufgebracht und eingebrannt, um einen Zweischichtaufbau zu prüfen; hierbei ergaben sich jedoch im Vergleich zu dem einfachen Lackaufbau keine signifikant anderen Ergebnisse als erwartet, weshalb die zugehörigen Eigenschaften auch nicht separat aufgeführt werden. Aber der Korrosionsschutz wurde durch den höheren Lackschichtaufbau erwartungsgemäß verbessert und teilweise die Flexibilität oder/und Elastizität geringfügig verschlechtert.

Bei Vorversuchen zeigte sich, dass die Beschichtungen allein auf Basis von Epoxyacrylat in einer Eigenschaft relativ schlechte Ergebnisse erbrachten, weil sich die Beschichtung teilweise abgelöst hatte und weil die Beschichtung keine ausreichende Flexibilität aufwies. Gute Ergebnisse hatten sich auf der Basis von Gemischen mit einem Anteil an Epoxyacrylat deutlich kleiner 50 Gew.-% ergeben, insbesondere bei der Korrosionsbeständigkeit sogar sehr gute. Epoxyacrylat kann den polymeren Überzug sehr hart gestalten. Auch die Versuche mit einem etwas höheren Gehalt an organischem Lösemittel führten zu weniger guten Ergebnissen. Besonders bewährt hatten sich Proben auf der Basis von Polyesterurethanacrylat mit aliphatischem Urethanacrylat oder Gemische enthaltend mindestens zwei modifizierte Polyesterurethanacrylate. Der Gehalt an Bindemitteln auf Basis von mindestens einem Polyesterurethanacrylat, mindestens einem modifizierten Polyesterurethanacrylat oder/und mindestens einem Urethanacrylat beträgt vorzugsweise 25 bis 37 Gew.-%, besonders bevorzugt 27 bis 35 Gew.-%, insbesondere mindestens 28 Gew.-% bzw. insbesondere bis zu 34 Gew.-%. Der Gehalt an radikalischen Bindemitteln einschließlich chemischen Nachvernetzern beträgt vorzugsweise 25 bis 41 Gew.-%, besonders bevorzugt 27 bis 39 Gew.-%, insbesondere mindestens 28 Gew.-% bzw. insbesondere bis zu 37 Gew.-%.

Die Flexibilität wurde einerseits bestimmt über einen T-Bend-Test z.B. von ≤ T4 nach ECCA-Standard T7 (European Coil Coating Association 1985): Es wurden Blechstreifen bei einer Breite von maximal 60 mm mit einer Druckluftabkantpresse der Wilhelm Jonescheit Maschinenfabrik abgekantet. Hierbei bezeichnet T1 die einfache Dicke, T2 die zweifache Dicke usw. des verwendeten Blechstreifens als Maß für den Durchmesser und den Abstand der U-förmig mit parallelen Flächen umgebogenen Blechstreifen, wobei je nach Flexibilität des Decklackfilms bei decklackierten Blechen z.B. bei T1 bis T4 bei einem Biegeradius z.B. von (T1)/2 bei Blechen ohne Decklack eingestellt wird und wobei mit z.B. T1 das kleinste Maß der Umbiegung angegeben wird, bei der trotz Bekleben z.B. mit Tesafilm^{©} Nr. 4104 im Bereich der Umbiegung und bei jeweils anschließendem Abziehen des Tesafilms keine mit bloßem Auge sichtbare Beschädigung auftritt. Zur Kontrastverstärkung wurde zuvor eine Kupfersulfatlösung aufgebracht. Wenn hierbei keine sichtbare Verfärbung der Oberfläche auf, ist davon auszugehen, dass die Oberfläche nicht beschädigt ist.

Andererseits wurde die Elastizität, Flexibilität und Haftfestigkeit über eine Kugelschlagprüfung als Impact Test nach DIN EN ISO 6272 mit Modell 304 einschließlich Fallrohr der Fa. Erichsen mit einer 1 kg-Kugel und mit zusätzlichem 1 kg-Zusatzgewicht über 1 m Fallhöhe geprüft. Die dabei getroffenen erfindungsgemäß beschichteten Bleche blieben bei Prüfung mit bloßem Auge meistens beschädigungsfrei. Es wurde im "direct impact test" mit der Primer-beschichteten Seite nach oben gearbeitet, jedoch ohne Gitterschnitt-ras-ter.

Es wurde eine extrem hohe Flexibilität erzielt durch Auswahl geeigneter reaktiverer Bindemittel und Monomere, so dass bei einer Trockenfilmdicke von 8 µm sogar T-Bend-Test-Werte von ≤ T1 und sogar von T0 erzielt wurden, wo bei ähnlichen anionisch, kationisch oder/und radikalisch härtenden Bindemittelsystemen wie bei einem UV-Kantenschutzlack bisher nur Werte von T3 erreicht wurden.

Die Gleit- und Umformeigenschaften wurden ermittelt als Näpfchentiefung nach Erichsen. Es wurde mit einem Näpfchenzuggerät Modell 142-20 der Fa. Erichsen mit 33 mm Stempeldurchmesser bei einer Preßgeschwindigkeit . von 750 mm/min an Ronden von 60 mm Durchmesser aus erfindungsgemäß beschichteten Blechen geprüft. Hierbei wurde bestimmt, ob die verformten Bleche frei von Abrieb und Riefen sind, wobei dies auch als Maß der Einwirkung bei Rollformvorgängen dient.

Die Gleit- und Umformeigenschaften erwiesen sich im Vergleich zu konventionellen Primer-Beschichtungen als überraschend gut.

Die Elastizität und Haftfestigkeit wurde außerdem an erfindungsgemäß beschichteten Blechen mit der Erichsen-Tiefungsprüfung nach DIN EN ISO 1520 mit Kugeldruck mit einer Kugel von 20 mm Durchmesser und mit einem Gerät vom Typ 202-C der Fa. Erichsen bestimmt, bei dem die Kugel mit einer Geschwindigkeit von 0,1 bis 0,3 mm/sec in die unbeschichtete Rückseite des einseitig erfindungsgemäß beschichteten Bleches gedrückt wurde. Hierbei wurde kein Gitterschnittraster verwendet. Die verformten Bleche sollen keine Risse und kein Ablösen der Beschichtung zeigen; gemessen wird hierbei die Eindringtiefe in mm bis zum Beginn der Bildung ersten Fehlstellen wie z.B. Ablösungen oder Rissen, die mit bloßem Auge sichtbar sind. Geprüft wurde bei Blechdicken von 0,75 mm. Darüber hinaus kann bei Bedarf an den verformten Partien mit einem aufgeklebten und danach abgerissenen Tesafilmstreifens die Haftfestigkeit und Freiheit von Ablösungen und Rissen noch einmal geprüft werden. Je größer die Tiefungswerte sind, desto besser sind Elastizität und Haftfestigkeit.

Die ermittelte Elastizität ist teilweise deutlich besser als bei herkömmlichen Primer-Beschichtungen.

Die Korrosionsbeständigkeit wurde an erfindungsgemäß beschichteten Blechen im Salzsprühtest nach DIN 50021 einerseits über die Fläche der erfindungsgemäß beschichteten Bleche, andererseits an geritzten erfindungsgemäß beschichteten Blechen über die Unterwanderung am Ritz nach unterschiedlich langen Prüfzeiten bestimmt.

Es ergab sich ein außerordentlich hoher Korrosionsschutz für lackartige Beschichtungen mit einer Trockenfilmdicke von 8 µm. Solche Werte wurden nach Kenntnis der Anmelderin mit einem Lack oder lackähnlichen Material zuvor bisher noch nie erreicht: Denn nach mehr als 200 Stunden Salzsprühtest hatten sich noch keine signifikanten Korrosionserscheinungen bei den erfindungsgemäßen Beispielen B1 bis B10 angedeutet, nach 150 h bzw. 300 h jedoch gar keine Spuren. Die Norm wurde von einzelnen Proben auch nach mehr als 400 h erfüllt, da selbst über diese Zeit noch keine Blasen entstanden. Die Unterwanderung am Ritz betrug nach 150 h bzw. 350 h an erfindungsgemäß beschichteten Blechen nur 1 bis 2 mm, wo sonst üblicherweise 4 bis 10 mm Unterwanderung ermittelt werden. Bei einigen Proben wurden sogar 400 h am Ritz erfolgreich überstanden.

Die Haftung wurde im Gitterschnitt-Test nach DIN EN 2409 geprüft. Bei den erfindungsgemäßen Beispielen wurden Werte, außer bei den Beispielen B14 und B15, Werte kleiner Gt 2, oft sogar von Gt 0 ermittelt. Konventionelle Primer-Beschichtungen, die direkt auf eine metallische Oberfläche ohne Vorbehandlungsschicht aufgebracht werden, zeigen praktisch immer Werte von Gt4 oder Gt5, wobei die Werte von Gt0 bis Gt5 reichen und Gt5 der schlechteste ist.

Bezüglich der Haftung zum metallischen Substrat wurden beim T-Bend-Test jetzt nach Kenntnis der Anmelderin erstmals Werte von T0 sogar ohne Anwesenheit einer Vorbehandlungsschicht mit einem anionisch, kationisch oder/und radikalisch härtenden Bindemittelsystem erzielt. Eine derart hohe Haftung, erzielt durch die Anbindungseigenschaften der Polymere und haftungsvermittelnder Additive, erscheint jedoch sinnvoll und in manchen Fällen sogar notwendig, wenn die erfindungsgemäße Korrosionsschutzzusammensetzung als Pretreatment-Primer direkt auf dem metallischen Untergrund aufgebracht wird.

Der erfindungsgemäße Korrosionsschutzüberzug war, was keineswegs selbstverständlich ist, sehr gut überlackierbar und zeigte eine sehr hohe Chemikalienbeständigkeit, wobei die hohe Qualität auch über die Auswahl der Harze und ihre Vernetzung erreicht wurde. Die Überlackierbarkeit ließ sich mit den gleichen Maßnahmen verbessern, mit denen die Haftung verbessert wurde.

Der erfindungsgemäße Korrosionsschutzüberzug erwies sich auch über die Alterung des Bindemittelsystems praktisch nicht versprödend, anders als wässerige UV-Systeme, bei denen eine Versprödung einerseits nach einer Zeit über 2 bis 3 Tage der Härtung nach der UV-Bestrahlung bzw. über die Jahre danach bei der Langzeitalterung deutlich beobachtet werden kann. Bisher wurden noch keine so versprödungsarmen anionisch, kationisch oder/und radikalisch härtenden Bindemittelsysteme bei einem 100%-System (lackartiges System mit keinem oder nur geringem Gehalt an Wasser oder/und Lösemitteln(n)) nach Kenntnis der Anmelderin bekannt. Die Versprödungsneigung wurde an erfindungsgemäß beschichteten und gehärteten Blechen jeweils durch T-Bend-Test als Flexibilitätstest nach ECCA-Standard T7 vor und nach zusätzlichen zehnmaligen UV-Bestrahlungen bei etwa 340 nm Wellenlänge und bei einer Leuchtdichte von jeweils etwa 600 mJ/cm² nach 2 Tagen nach Applikation nach Applikation ermittelt. Wenn nach der zusätzlichen fünfmaligen UV-Bestrahlung die T-Bend-Test-Werte unverändert sind im Vergleich zu den T-Bend-Test-Werte vor dieser zusätzlichen Bestrahlungen, ist die Versprödungsneigung gering oder nicht nachweisbar, bei Verwendung von zusätzlich achtmaligen Bestrahlungen außergewöhnlich gering oder nicht nachweisbar. Hierbei wird davon ausgegangen, dass der Film zuvor bereits ausreichend gehärtet war, so dass eine Versprödung oder Überhärtung simuliert werden kann. Eine ausreichende Vernetzung konnte durch geeignete Auswahl der Monomere, Oligomere oder/und Polymere sowie der geeigneten Initiatoren bzw. ihrer eingesetzten Mengen sichergestellt werden. Es erfolgt daher keine messbare Nachhärtung und keine messbare Versprödung. In den Tabellen 2 und 3 werden die Eigenschaften nach 10 zusätzlichen Bestrahlungen angeführt. Risse sind dabei ein Anzeichen dafür, dass bereits ohne eine zusätzliche Bestrahlung eine vergleichsweise sehr hohe Vernetzung erzielt wurde.

Der erfindungsgemäße Korrosionsschutzüberzug erwies sich auch sofort nach Applikation und ausreichender Vernetzung der Korrosionsschutzzusammensetzung auf einem Band als nichtklebend (tack-free).

Die Chemikalienbeständigkeit wurde im MEK-Test mit Methyl-Ethyl-Keton-Lösemittel nach ECCA-Standard T11 bestimmt. Es wurde durch ständiges regelmäßiges Wischen mit Watte bei einem Auflagegewicht von etwa 40 g Belastung über 25 cm Länge der Oberfläche des Korrosionsschutzüberzugs nach Standard ECCA T11 über mehr als 30 Zyklen (=Doppelhüben) geprüft, wieviele Zyklen vom erfindungsgemäßen Korrosionsschutzüberzug ausgehalten werden, ohne seine Oberfläche bei Prüfung mit bloßem Auge sichtbar zu beschädigen.

Die Reaktivität des erfindungsgemäßen Bindemittelsystems konnte drastisch erhöht werden, insbesondere durch die Auswahl der Photoinitiatoren - insbesondere nach ihrer Reaktivität, reaktiveren Bindemittel und des Zusetzens von tertiärem Amin, wobei bevorzugt Bindemittel ausgewählt wurden, die bei ausreichender Vernetzung bereits in einer Trockenfilmdicke von 8 µm eine MEK-Beständigkeit größer 40 Zyklen aufweisen; in den Versuchen wurde jedoch sogar eine MEK-Beständigkeit von bis zu 132 Zyklen erreicht. Darüber hinaus wurden bei langsamerer Bandgeschwindigkeit und alternativ bei höherer Zahl an UV-Lampen, die bei gleicher Schichtdicke auch zu einer längeren UV-Aushärtung führte, MEK-Zyklenzahlen von 106, 110, 119, 123 und 132 erzielt. Beim MEK-Test ist darauf zu achten, dass alle Prüfbedingungen konstant gehalten werden, insbesondere die Bedingungen des Wischens.

Die Wasserbeständigkeit wurde im Kondenswasser-Wechselklima-Test nach DIN 50017 über 400 h geprüft. Hierbei wurden die erfindungsgemäß beschichteten Bleche in entionisiertem Wasser unbewegt gelagert. Bei ausreichender Abstimmung der Korrosionsschutzzusammensetzung und der verfahrenstechnischen Bedingungen konnten vielfach nach 400 h im Test blasenfreie, mit bloßem Auge unbeschädigte Korrosionsschutzüberzüge erhalten werden. Einzelne Proben konnten diesen Test über 500 h bzw. sogar über 600 h erfolgreich durchstehen.

In einer weiteren Versuchsreihe wurde die erfindungsgemäße Zusammensetzung ausgehend von der Zusammensetzung von Beispiel B 14 der Tabelle 1 weiter variiert (siehe hierzu Tabelle 4):
Bei den Beispielen B 25 bis B 29 wurde ein anderes, hinsichtlich der Reaktivität verbessertes modifiziertes Polyurethanacrylat anstelle von dem bisher eingesetzten nicht-modifizierten Polyurethanacrylat zugesetzt. Bei den Beispielen B 26 bis B 29 wurde dieser Gehalt noch ein wenig erhöht und der Anteil an Isobornylmethacrylat entsprechend verringert. Bei den Beispielen B 27 bis B 29 wurde zusätzlich Benzophenon durch ein noch reaktiveres Gemisch auf Basis von Alkylbenzoylformat ersetzt. Bei den Beispielen B 28 und B 29 wurde dieser Gehalt noch geringfügig erhöht. Beim Beispiel B 29 wurde zusätzlich noch Polyproylenwachs zugegeben. Im übrigen waren die Herstellbedingungen der beschichteten Substrate weitestgehend mit denen der zuvor beschriebenen Beispiele identisch. Es wird erwartet, dass ähnliche Verfahrensänderungen wie hier beschrieben auch aufbauend auf den übrigen Vergleichsbeispielen zumindest teilweise zu den erfindungsgemäßen Überzügen führen wird und MEK-Werte bis ca. 150 Zyklen ergeben wird.

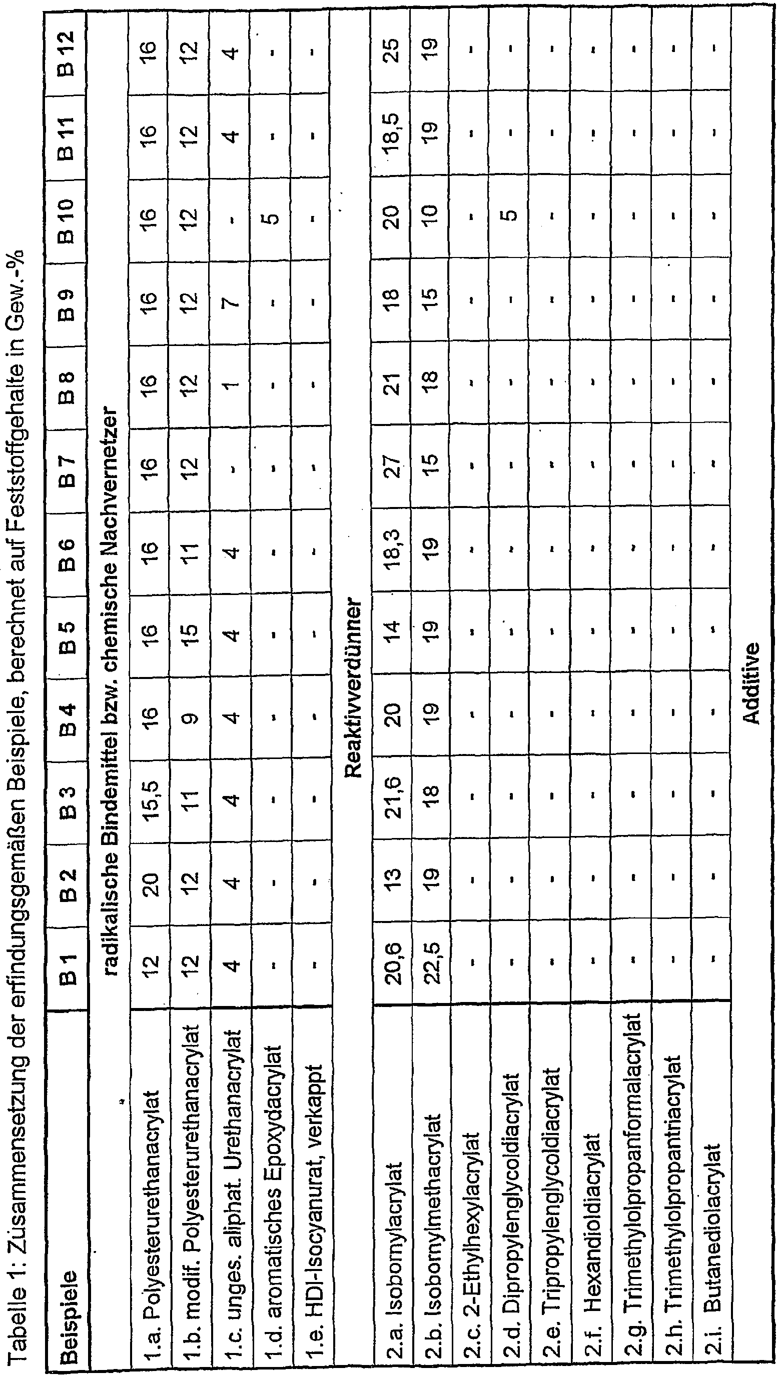

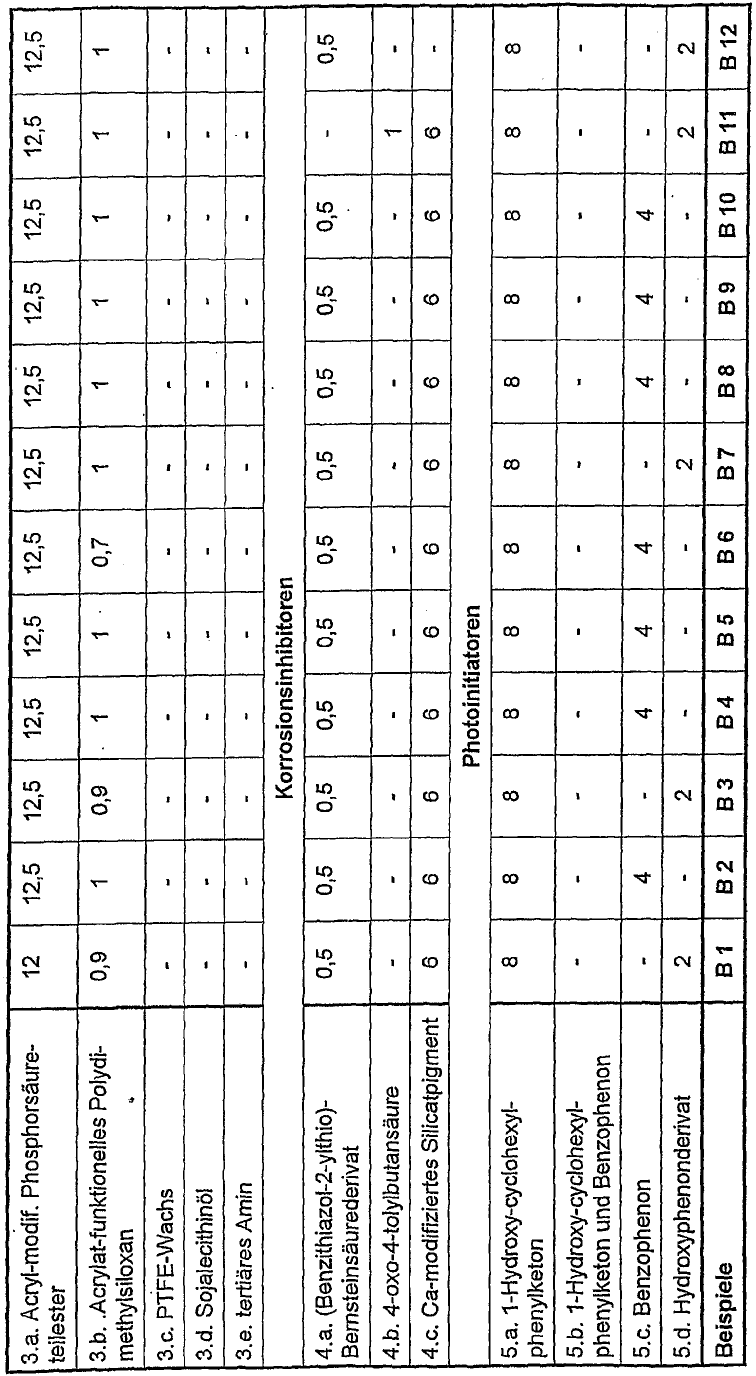

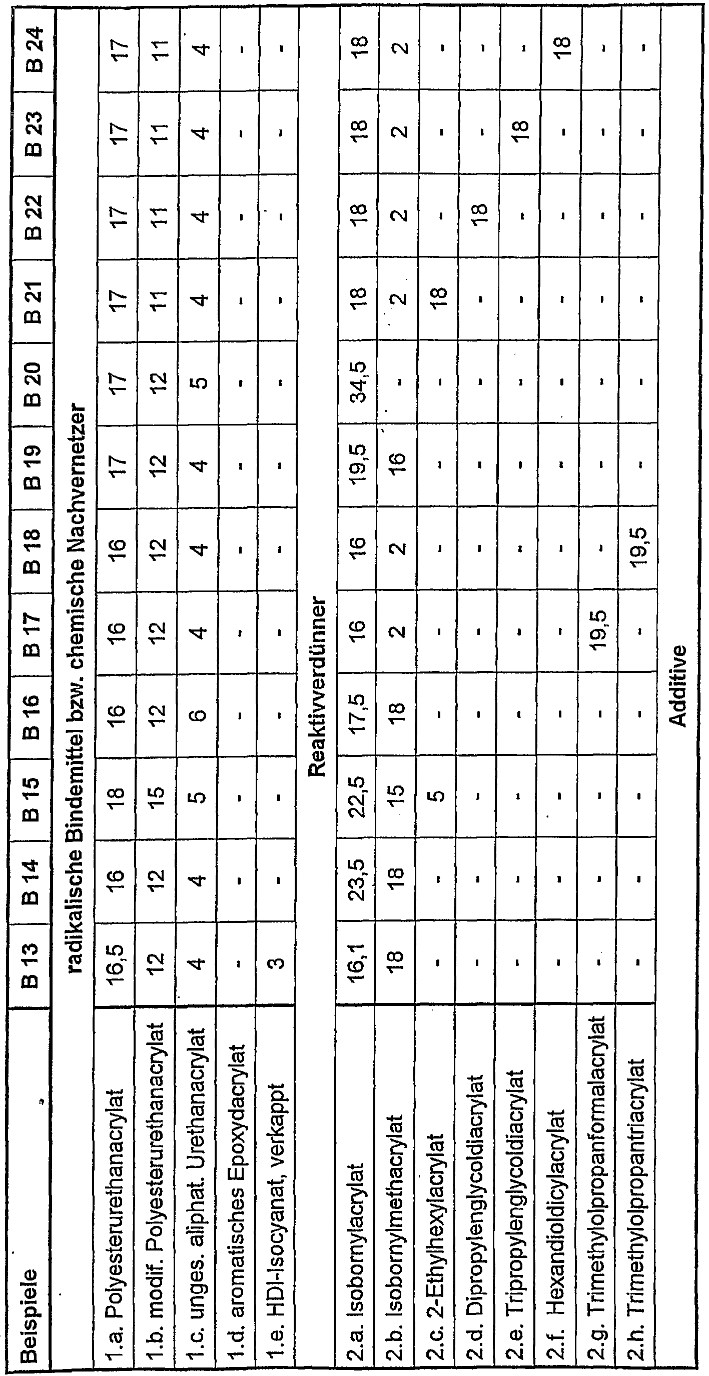

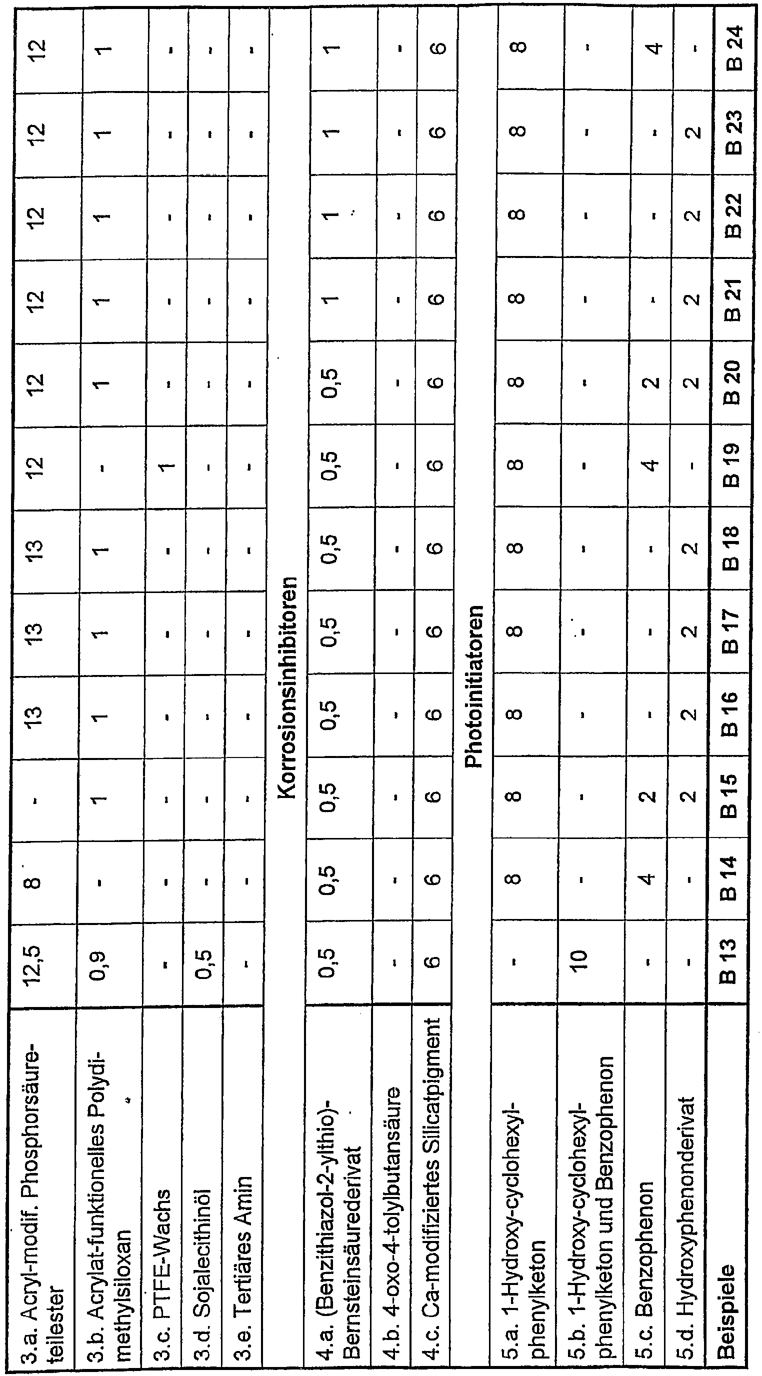

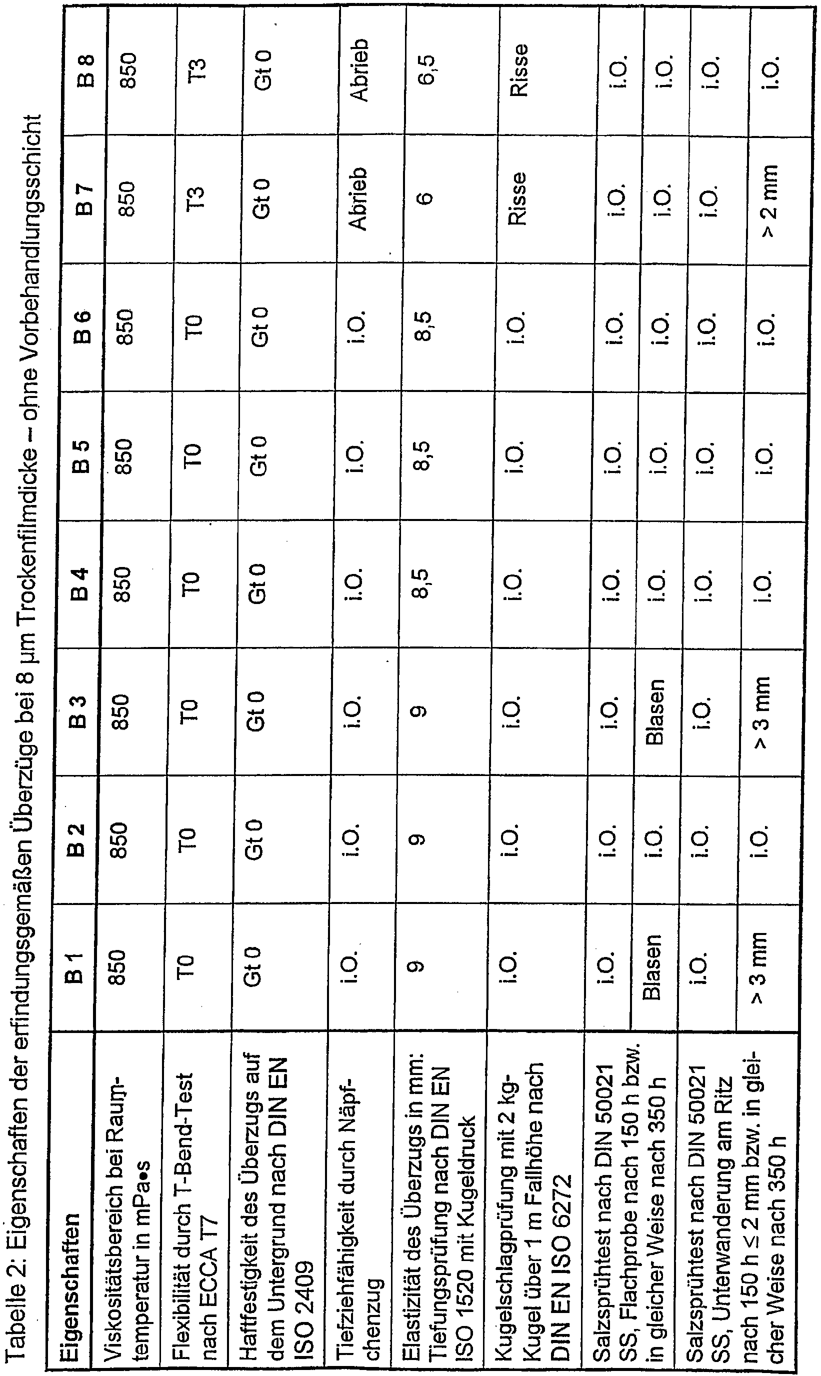

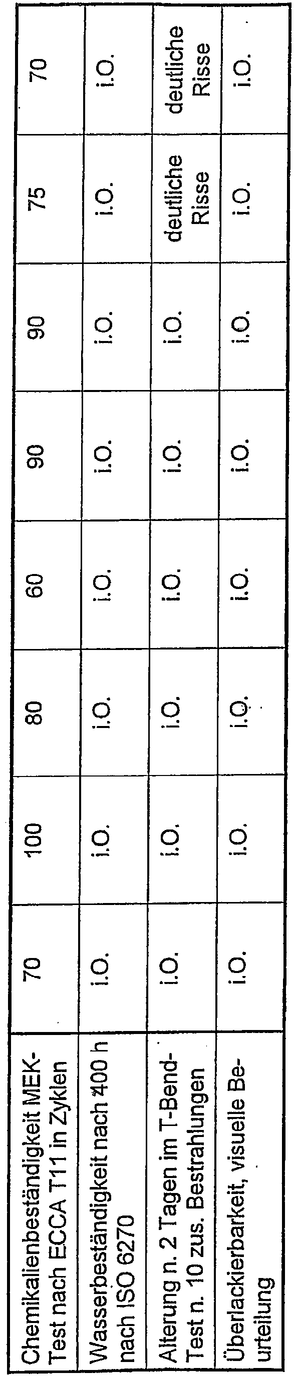

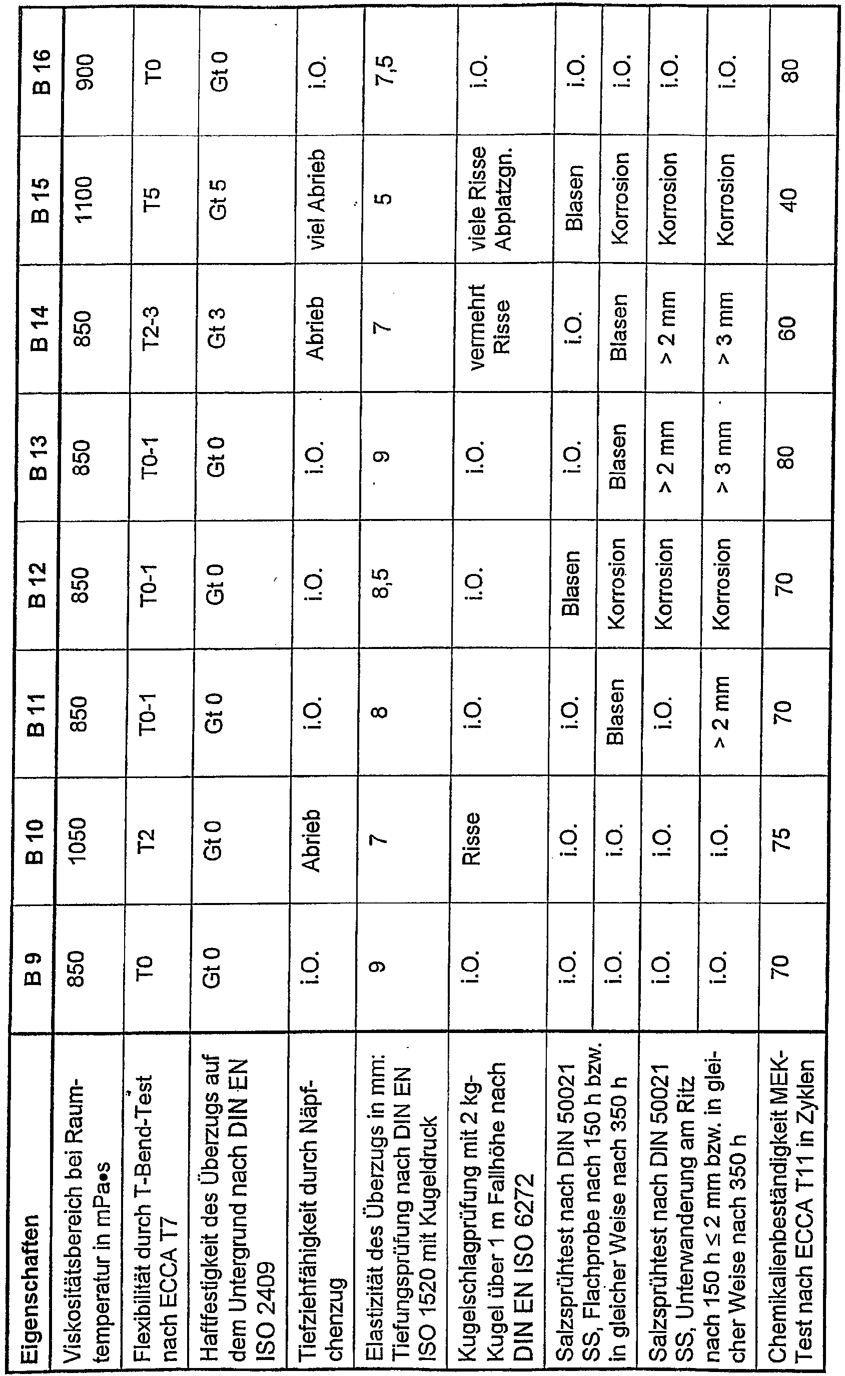

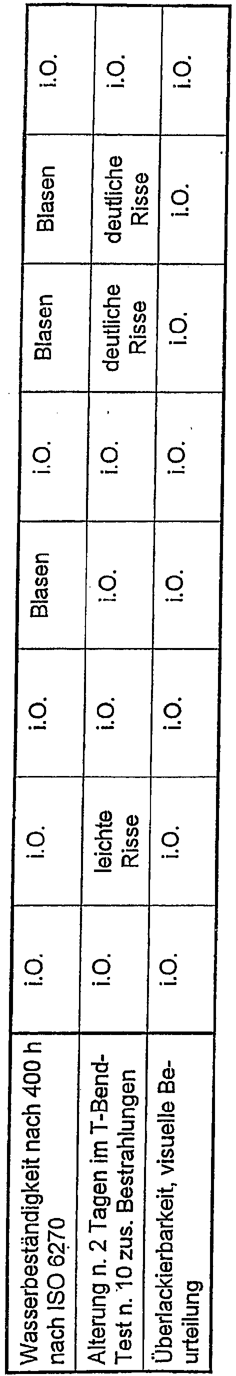

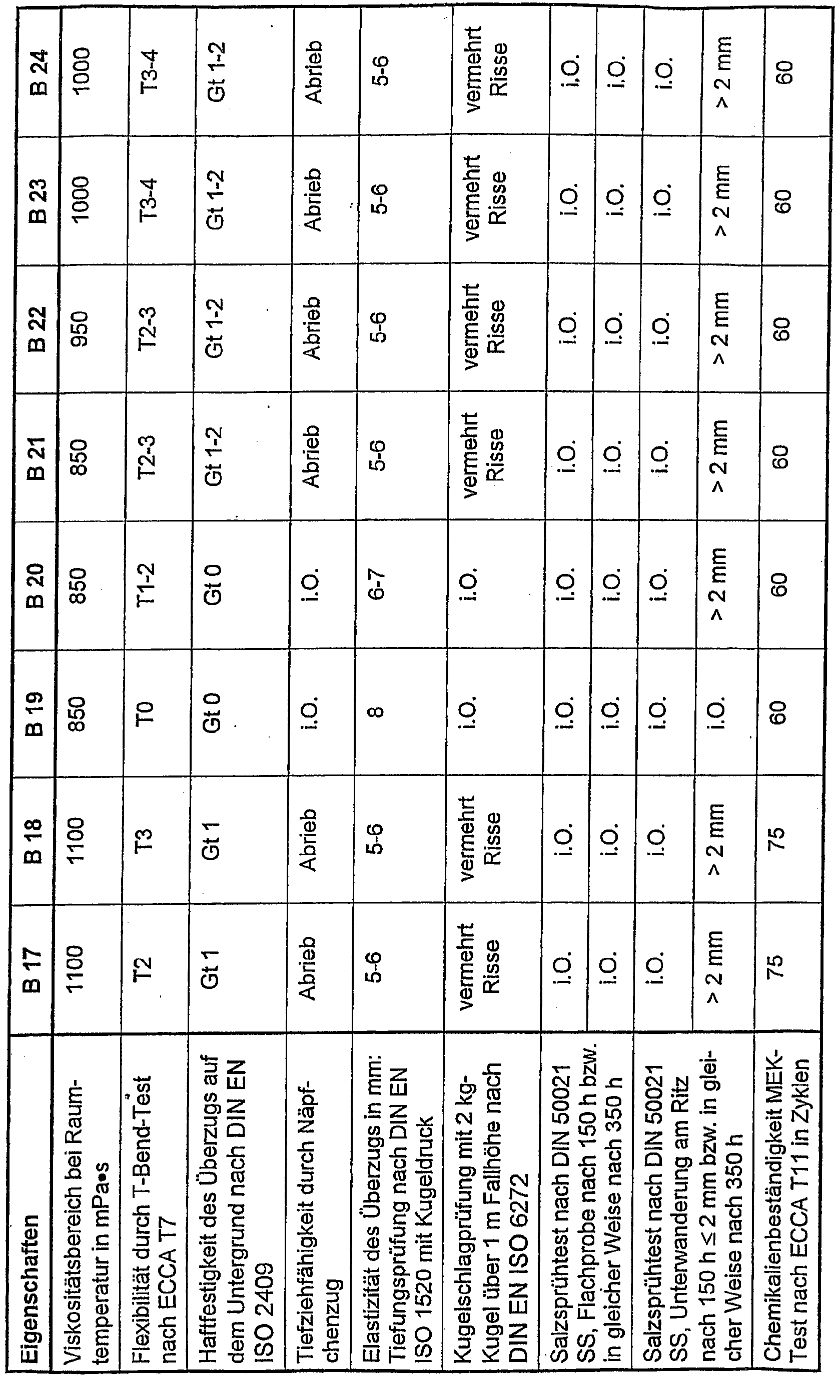

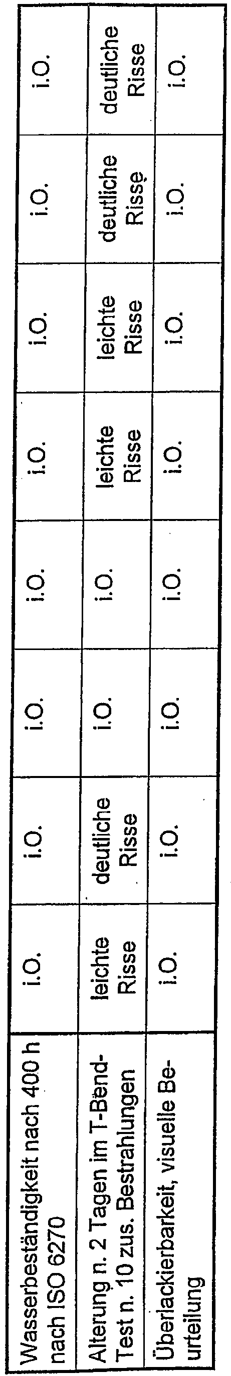

**Tabelle 3: Eigenschaften der erfindungsgemäßen Überzüge bei 8 µm Trockenfilmdicke, für vier Beispiele links zusätzlich auf einer Vorbehandlungsschicht bzw. rechts statt dessen mit einer Decklackschicht unter sonst jeweils gleichen Bedingungen wie in den vorigen Tabellen**

| Eigenschaften | **B1** | **B2** | **B3** | **B4** | **B1** | **B2** | **B3** | **B4** |
|---|---|---|---|---|---|---|---|---|
| Unterschiede zu den bisherigen Beispielen | zusätzlich auf chromfreier Vorbehandlungsschicht auf Basis einer Zusammensetzung mit Fluorid und Phosphat, ohne Decklack | | | | ohne Vorbehandlungsschicht, zusätzlich mit Decklackschicht mit 30 µm Trockenfilmdicke eines thermisch vernetzendem Einbrennlacks, 20 min 160 °C | | | |
| Flexibilität durch T-Bend-Test nach ECCA T7 | ≤T1 | ≤T1 | ≤T1 | ≤T1 | T2 | ≤T2 | ≤T3 | ≤T3 |
| Haftfestigkeit des Überzugs auf dem Untergrund nach DIN EN ISO 2409 | Gt 0 | Gt 0 | Gt 0 | Gt 0 | Gt 0 | Gt 0 | Gt 0 | Gt 0 |
| Tiefziehfähigkeit durch Näpfchenzug | i.O. | i.O. | i.O. | i.O. | - | - | - | - |
| Elastizität des Überzugs in mm: Tiefungsprüfung nach DIN EN ISO 1520 mit Kugeldruck | 8,5 | 8,5 | 8,5 | 8 | 7,5 | 8 | 7 | 7 |
| Kugelschlagprüfung mit 2 kg-Kugel über 1 m Fallhöhe nach DIN EN ISO 6272 | i.O. | i.O. | i.O. | i.O. | i.O. | i.O. | i.O. | i.O. |
| Salzsprühtest nach DIN 50021 SS, Flachprobe nach 200 h bzw. in gleicher Weise nach 500 h | i.O. | i.O. | i.O. | i.O. | - | - | - | - |
| | Blasen | i.O. | Blasen | i.O. | - | - | - | - |
| Salzsprühtest nach DIN 50021 SS, Flachprobe nach 500 h bzw. in gleicher Weise nach 1000 h | - | - | - | - | i.O. | i.O. | i.O. | i.O. |
| | - | - | - | - | i.O. | i.O. | i.O. | i.O. |
| Salzsprühtest nach DIN 50021 SS, Unterwanderung am Ritz nach 200 h ≤ 2 mm bzw. in gleicher Weise nach 400 h | i.O. | i.O. | i.O. | i.O. | - | - | - | - |
| | > 2 mm | i.O. | >2mm | i.O. | - | - | - | - |
| Salzsprühtest nach DIN 50021 SS, Unterwanderung am Ritz nach 400 h ≤ 2 mm bzw. in gleicher Weise nach 800 h | - | - | - | - | i.O. | i.O. | i.O. | i.O. |
| | - | - | - | - | i.O. | i.O. | i.O. | i.O. |
| Chemikalienbeständigkeit MEK-Test nach ECCA T11 in Zyklen | 70 | 100 | 80 | 60 | 100 | 100 | 100 | 100 |
| Wasserbeständigkeit nach 400 h nach ISO 6270 | i.O. | i.O. | i.O. | i.O. | i.O. | i.O. | i.O. | i.O. |
| Alterung n. 2 Tagen im T-Bend-Test n. 10 zus. Bestrahlungen | i.O. | i.O. | i.O. | i.O. | Risse | Risse | Risse | Risse |
| Überlackierbarkeit, visuelle Beurteilung | i.O. | i.O. | i.O. | i.O. | i.O. | i.O. | i.O. | i.O. |

**Tabelle 4: Eigenschaften der Beschichtungen, die bei der weiteren Versuchsreihe hergestellt wurden.**

| Beispiel | B 25 | B 26 | B 27 | B 28 | B 29 |
|---|---|---|---|---|---|
| Chemikalienbeständigkeit MEK-Test nach ECCA T11 in Zyklen | 106 | 110 | 119 | 123 | 132 |
| Elastizität des Überzugs in mm: Tiefungsprüfung nach DIN EN ISO 1520 mit Kugeldruck, Blechdicke 0,75 mm | 8 | 8 | 7 | 8 | 9 |
| Tiefziehfähigkeit durch Näpfchenzug | i.O., kein Abrieb | wenig Abrieb | Abrieb | wenig Abrieb | i.O., kein Abrieb |
| Überlackierbarkeit, visuelle Prüfung | i.O. | i.O. | i.O. | i.O. | i.O. |

## Patentansprüche

1. Verfahren zur Beschichtung von Oberflächen von metallischen Substraten mit einer organischen, anionisch, kationisch oder/und radikalisch härtbaren Korrosionsschutzzusammensetzung, **dadurch gekennzeichnet,**
**dass** die Korrosionsschutzzusammensetzung eine Dispersion oder Lösung ist, die bis zu 3 Gew.-% Wasser oder/und bis zu 3 Gew.-% organischer Lösemittel sowie Reaktivverdünner enthält,
die mindestens zwei Komponenten ausgewählt aus der Gruppe von Monomeren, Oligomeren und Polymeren mit einem Gesamtgehalt im Bereich von 50 bis 95 Gew.-% enthält, die zumindest teilweise anionisch, kationisch oder/und radikalisch härtbar sind,
wobei hierin ein Gehalt an mindestens einem mono-funktionellen Monomer oder/und Oligomer im Bereich von 1 bis 58 Gew.-% mit einem Gehalt an Isobornylacrylat oder/und Isobornylmethacrylat sowie ein Gehalt an mindestens einem Basispolymer auf Basis von Acrylat, Epoxid, Methacrylat, Polyester, Polyurethan oder/und deren Mischpolymerisaten im Bereich von 5 bis 50 Gew.-% enthalten sind,
wobei die Korrosionsschutzzusammensetzung außerdem mindestens einen Photoinitiator zur anionischen, kationischen oder/und radikalischen Vernetzung mit einem Gehalt im Bereich von 0,5 bis 22 Gew.-% enthält, falls keine Elektronenstrahlung eingesetzt wird,
einen ersten, organischen Korrosionsinhibitor
sowie einen Gesamtgehalt an Additiven im Bereich von 0,05 bis 22 Gew.-% enthält,
jeweils bezogen auf die Feststoffgehalte in Gew.-%,
wobei die Korrosionsschutzzusammensetzung auf die metallischen Oberflächen in einer Naßfilmdicke im Bereich von 0,4 bis 25 µm aufgebracht wird und danach zu einem Korrosionsschutzüberzug anionisch, kationisch oder/und radikalisch gehärtet wird,
wobei der Korrosionsschutzüberzug eine Trockenfilmdicke im Bereich von 0,4 bis 20 µm und eine Chemikalienbeständigkeit von mehr als 40 MEK-Zyklen, ermittelt im MEK-Test nach ECCA-Standard T11 mit Methyl-Ethyl-Keton, aufweist.

2. Verfahren nach Anspruch 1, **dadurch gekennzeichnet, dass** vor der Beschichtung mit einer ersten organischen Korrosionsschutzzusammensetzung keine Vorbehandlungsschicht auf die metallischen Oberflächen aufgebracht wird.

3. Verfahren nach Anspruch 1 oder 2, **dadurch gekennzeichnet, dass** der Korrosionsschutzzusammensetzung Monomere oder/und Oligomere zugesetzt werden auf Basis von ungesättigten Verbindungen.

4. Verfahren nach Anspruch 3, **dadurch gekennzeichnet, dass** der Korrosionsschutzzusammensetzung ungesättigte aliphatische Acrylate zugesetzt werden.

5. Verfahren nach einem der vorstehenden Ansprüche, **dadurch gekennzeichnet, dass** der Korrosionsschutzzusammensetzung mindestens ein anionisch, kationisch oder/und radikalisch polymerisierbares Monomer oder/und Oligomer zugesetzt wird ausgewählt aus der Gruppe von Verbindungen auf Basis von Acrylat, Methacrylat, Polyester oder/und Polyurethan.

6. Verfahren nach einem der vorstehenden Ansprüche, **dadurch gekennzeichnet, dass** der Korrosionsschutzzusammensetzung mindestens ein anionisch, kationisch oder/und radikalisch polymerisierbares Monomer oder/und Oligomer zugesetzt wird ausgewählt aus der Gruppe von Verbindungen von Butandioldiacrylat, Diethylenglycoldiaycrylat, Dipropylenglycoldiacrylat, 2-Ethylhexylacrylat, Hexandioldicylacrylat, Hydroxypropylmethacrylat, Isobornylacrylat, Isobornylmethacrylat, Polyethylendiacrylat, Triethylolpropanformalacrylat, Trimethylpropantriacrylat, Trimethy-lolpropanformalacrylat, Triethylolpropanacrylat, Trimethylolpropanacrylat und Tripropylenglycoldiacrylat.

7. Verfahren nach einem der vorstehenden Ansprüche, **dadurch gekennzeichnet, dass** der Korrosionsschutzzusammensetzung zusätzlich mindestens ein Elastifizierungsharz oder/und mindestens ein modifiziertes Elastifizierungsharz zugesetzt wird auf Basis von ungesättigten aliphatischen Polymeren auf Basis von Acrylat, Methacrylat, Polyester oder/und Polyurethan.

8. Verfahren nach einem der vorstehenden Ansprüche, **dadurch gekennzeichnet, dass** der Korrosionsschutzzusammensetzung zusätzlich mindestens ein haftungsvermittelndes Polymer zugesetzt wird.

9. Verfahren nach Anspruch 8, **dadurch gekennzeichnet, dass** als das mindestens eine haftungsvermittelnde Polymer mindestens eines auf Basis von Phosphorsäureestern mit Polymeren auf Basis von Acrylat, Epoxid, Methacrylat, Polyester, Polyurethan oder/und deren Mischpolymerisaten zugesetzt wird.

10. Verfahren nach einem der vorstehenden Ansprüche, **dadurch gekennzeichnet, dass** der Korrosionsschutzzusammensetzung mindestens ein Photoinitiator auf Basis von Verbindungen ausgewählt aus der Gruppe von Aminoketonen, Benzoinethern, Benzophenonen, Dimethylketalen, Glyoxylaten, Hydroxyketonen, Hydroxyphenonen, Isopropylethern, Metallocenen, organischen Jod-Verbindungen, Phenylketonen, Phenylpropanen, Phosphinoxiden und deren Derivaten zugesetzt wird, um eine anionische, kationische oder/und radikalische Härtung zu ermöglichen.

11. Verfahren nach einem der vorstehenden Ansprüche, **dadurch gekennzeichnet, dass** der Korrosionsschutzzusammensetzung mindestens ein Vernetzungsmittel auf Basis von Isocyanat, Isocyanurat, Melaminharz oder/und Verbindungen, die Isocyanat bzw. Isocyanurat bei erhöhter Temperatur freisetzen können, zugesetzt wird, um eine chemische Nachvernetzung zu ermöglichen.

12. Verfahren nach einem der vorstehenden Ansprüche, **dadurch gekennzeichnet, dass** der Korrosionsschutzzusammensetzung mindestens ein erster, organischer Korrosionsinhibitor zugesetzt wird ausgewählt aus der Gruppe von Verbindungen auf Basis von Aminen, Derivaten einer organischen Säure, Thiolen und leitfähigen Polymeren.

13. Verfahren nach einem der vorstehenden Ansprüche, **dadurch gekennzeichnet, dass** der Korrosionsschutzzusammensetzung mindestens ein weiterer, organischer oder/und anorganischer Korrosionsinhibitor zugesetzt wird ausgewählt aus der Gruppe von Korrosionsschutzpigmenten auf Basis von Kieselsäure(n), Oxid(en) oder/und Silicat(en) und von Verbindungen von Titan, Hafnium, Zirkonium, Carbonat, Ammoniumcarbonat, Aminen, Amin-Derivaten, Derivaten einer organischen Säure, Thiolen oder/und leitfähigen Polymeren.

14. Verfahren nach Anspruch 13 **dadurch gekennzeichnet, dass** der Korrosionsschutzzusammensetzung Korrosionsinhibitoren zugesetzt werden in einem Verhältnis der organischen zu den anorganischen Korrosionsinhibitoren im Bereich von 1 : 8 bis 1 : 20.

15. Verfahren nach einem der vorstehenden Ansprüche, **dadurch gekennzeichnet, dass** der Korrosionsschutzzusammensetzung als Additiv jeweils mindestens ein Benetzungsmittel, Entschäumer, Gleitmittel, Haftvermittler, Pigment, Verlaufsmittel, Mittel zur Steigerung der Reaktivität, Oberflächenadditiv zur Erhöhung der Kratzfestigkeit, Thixotropiehilfsmittel oder/und Mittel zur Untergrundbenetzung zugesetzt wird.

16. Verfahren nach einem der vorstehenden Ansprüche, **dadurch gekennzeichnet, dass** die Korrosionsschutzzusammensetzung mindestens ein Gleitmittel enthält ausgewählt aus der Gruppe von Verbindungen auf Basis von Graphit, Polyethylen, Polypropylen, Polytetrafluorethylen, Silan, Siloxan und Wachs.

17. Verfahren nach einem der vorstehenden Ansprüche, **dadurch gekennzeichnet, dass** die Korrosionsschutzzusammensetzung als Additiv mindestens ein Pigment enthält ausgewählt aus der Gruppe von Verbindungen auf Basis von Farbpigment, Metallpigment, Oxid, Phosphat, Phosphid, Phosphosilicat, Silicat, elektrisch leitfähigem Pigment und beschichtetem Pigment.

18. Verfahren nach einem der vorstehenden Ansprüche, **dadurch gekennzeichnet, dass** die Korrosionsschutzzusammensetzung beim Applizieren eine Viskosität im Bereich von 80 bis 20000 mPa•s aufweist, gemessen bei einer Temperatur von 25 °C mit einem Rotationsviskosimeter VT 500 der Fa. Haake mit einem DIN-Meßzylinder MV nach DIN 53019.

19. Verfahren nach einem der vorstehenden Ansprüche, **dadurch gekennzeichnet, dass** die Korrosionsschutzzusammensetzung beim Applizieren eine Temperatur im Bereich von 5 bis 90 °C aufweist.

20. Verfahren nach einem der vorstehenden Ansprüche, **dadurch gekennzeichnet, dass** die Korrosionsschutzzusammensetzung durch Gießen ohne oder mit Rakel, Spritzen, Sprühen, Tauchen oder/und Walzen auf die metallische Oberfläche aufgebracht wird.

21. Verfahren nach einem der vorstehenden Ansprüche, **dadurch gekennzeichnet, dass** Oberflächen von Aluminium, Aluminium-haltigen Legierungen, Chrom, Chromlegierungen, Magnesiumlegierungen, Edelstahl, Stahl, Zink, Zink-haltigen Legierungen, Zinn oder/und Zinn-haltigen Legierungen beschichtet werden.

22. Verfahren nach einem der vorstehenden Ansprüche, **dadurch gekennzeichnet, dass** der Naßfilm der Korrosionsschutzzusammensetzung bei Temperaturen im Bereich von 30 bis 95 °C getrocknet wird.

23. Verfahren nach einem der vorstehenden Ansprüche, **dadurch gekennzeichnet, dass** der weitgehend oder vollständig trockene Film der Korrosionsschutzzusammensetzung mit UV-Strahlung bestrahlt wird und hierdurch teilweise, weitgehend oder vollständig vernetzt wird.

24. Verfahren nach einem der vorstehenden Ansprüche, **dadurch gekennzeichnet, dass** die Korrosionsschutzzusammensetzung und der damit hergestellte, anionisch, kationisch oder/und radikalisch gehärtete Trockenfilm mindestens einen Härter enthält, so dass der Trockenfilm chemisch nachgehärtet wird.

25. Verfahren nach einem der vorstehenden Ansprüche, **dadurch gekennzeichnet, dass** das mit dem Korrosionsschutzüberzug beschichtete Substrat mit mindestens einer weiteren lackähnlichen Zusammensetzung, Lack, Farbe oder/und Klebstoff beschichtet wird.

26. Verfahren nach einem der vorstehenden Ansprüche, **dadurch gekennzeichnet, dass** der auf dem metallischen Körper aufgebrachte Korrosionsschutzüberzug mit dem Substrat umgeformt wird, wobei der Korrosionsschutzüberzug weitgehend oder gänzlich unbeschädigt bleibt.

27. Verfahren nach einem der vorstehenden Ansprüche, **dadurch gekennzeichnet, dass** das mit dem Korrosionsschutzüberzug beschichtete, umgeformte Substrat in Form eines umgeformten, geschnittenen oder/und gestanzten Bleches mit einem anderen Konstruktionselement durch Clinchen, Kleben, Schweißen oder/und mindestens einem anderen Fügeverfahren verbunden wird.

28. Verfahren nach einem der vorstehenden Ansprüche, **dadurch gekennzeichnet, dass** die metallische Oberfläche vor dem Aufbringen der Pretreatment-Primerschicht gereinigt oder/und gebeizt wird.

29. Verfahren nach einem der vorstehenden Ansprüche, **dadurch gekennzeichnet, dass** die Lösung oder Dispersion auf ein auf einer Bandanlage geführtes metallisches Band aufgebracht wird.

30. Organische, anionisch, kationisch oder/und radikalisch härtbare Korrosionsschutzzusammensetzung, **dadurch gekennzeichnet, dass** sie eine Dispersion oder Lösung ist,
die bis zu 3 Gew.-% Wasser oder/und bis zu 3 Gew.-% organischer Lösemittel sowie Reaktivverdünner enthält,
die mindestens zwei Komponenten ausgewählt aus der Gruppe von Monomeren, Oligomeren und Polymeren mit einem Gesamtgehalt im Bereich von 50 bis 95 Gew.-% enthält, die zumindest teilweise anionisch, kationisch oder/und radikalisch härtbar sind,
wobei hierin ein Gehalt an mindestens einem mono-funktionellen Monomer oder/und Oligomer im Bereich von 1 bis 58 Gew.-% mit einem Gehalt an Isobornylacrylat oder/und Isobornylmethacrylat sowie ein Gehalt an mindestens einem Basispolymer auf Basis von Acrylat, Epoxid, Methacrylat, Polyester, Polyurethan oder/und deren Mischpolymerisaten im Bereich von 5 bis 50 Gew.-% enthalten sind,
wobei die Korrosionsschutzzusammensetzung außerdem mindestens einen Photoinitiator zur anionischen, kationischen oder/und radikalischen Vernetzung mit einem Gehalt im Bereich von 0,5 bis 22 Gew.-% enthält, falls keine Elektronenstrahlung eingesetzt wird,
einen ersten, organischen Korrosionsinhibitor
sowie einen Gesamtgehalt an Additiven im Bereich von 0,05 bis 22 Gew.-% enthält,
jeweils bezogen auf die Feststoffgehalte in Gew.-%.

31. Verwendung der nach dem Verfahren gemäß einem der Ansprüche 1 bis 29 beschichteten Substrate in der Stahlindustrie, im Fahrzeugbau oder/und im Flugzeugbau, als Draht, Drahtwicklung, Drahtgeflecht, Blech, Verkleidung, Abschirmung, Karosserie oder Teil einer Karosserie, Teil eines Fahrzeugs, Anhängers, Wohnmobils oder Flugkörpers, Abdeckung, Gehäuse, Lampe, Leuchte, Ampelelement, Möbelstück oder Möbelelement, Element eines Haushaltsgeräts, Gestell, Profil, Formteil komplizierter Geometrie, Leitplanken-, Heizkörper- oder Zaunelement, Stoßstange, Teil aus oder mit mindestens einem Rohr oder/und einem Profil, Fenster-, Tür- oder Fahrradrahmen oder als Kleinteil.

32. Verwendung des nach dem Verfahren gemäß einem der Ansprüche 1 bis 29 hergestellten Korrosionsschutzüberzugs als Schutzbeschichtung beim Umformen oder/und Fügen, als Korrosionsschutz von Flächen bzw. im Kanten-, Naht- oder/und Schweißnahtbereich, als Schutz anstelle einer Hohlraumversiegelung oder/und einer Nahtabdichtung.

## Claims

1. A process for coating surfaces of metallic substrates, with an organic, anionically, cationically or/and radically curable anticorrosive composition, **characterised in that**
the anticorrosive composition is a dispersion or solution which contains up to 3 wt.% water or/and up to 3 wt.% organic solvent and also reactive thinners, which contains at least two components selected from the group of monomers, oligomers and polymers with a total content in the range from 50 to 95 wt.%, which are at least partially anionically, cationically or/and radically curable,
wherein a content of at least one monofunctional monomer or/and oligomer in the range from 1 to 58 wt.% with a content of isobornyl acrylate or/and isobornyl methacrylate and also a content of at least one base polymer based on acrylate, epoxide, methacrylate, polyester, polyurethane or/and copolymers thereof in the range from 5 to 50 wt.% are included herein, wherein the anticorrosive composition contains, moreover, at least one photoinitiator for anionic, cationic or/and radical cross-linking with a content in the range from 0.5 to 22 wt.%, if electron beam radiation is not used,
a first organic corrosion inhibitor
and also a total content of additives in the range from 0.05 to 22 wt.%,
relative in each case to the solids content in wt.%, wherein the anticorrosive composition is applied to the metallic surfaces in a wet film thickness in the range from 0.4 to 25 µm and is then anionically, cationically or/and radically cured to form an anticorrosive coating,
wherein the anticorrosive coating has a dry film thickness in the range from 0.4 to 20 µm and a resistance to chemicals of over 40 MEK cycles, determined in the MEK test in accordance with ECCA standard T11 with methyl ethyl ketone.

2. A process according to claim 1, **characterised in that** before coating with a first organic anticorrosive composition, no pretreatment layer is applied to the metallic surfaces.

3. A process according to claim 1 or 2, **characterised in that** monomers or/and oligomers based on unsaturated compounds are added to the anticorrosive composition.

4. A process according to claim 3, **characterised in that** unsaturated aliphatic acrylates are added to the anticorrosive composition.

5. A process according to one of the preceding claims, **characterised in that** at least one anionically, cationically or/and radically polymerisable monomer or/and oligomer selected from the group of compounds based on acrylate, methacrylate, polyester or/and polyurethane is added to the anticorrosive composition.

6. A process according to one of the preceding claims, **characterised in that** at least one anionically, cationically or/and radically polymerisable monomer or/and oligomer selected from the group of compounds comprising butanediol diacrylate, diethylene glycol diacrylate, dipropylene glycol diacrylate, 2-ethylhexyl acrylate, hexanediol dicyl acrylate, hydroxypropyl methacrylate, isobornyl acrylate, isobornyl methacrylate, polyethylene diacrylate, triethylol propane formal acrylate, trimethyl propane triacrylate, trimethylol propane formal acrylate, triethylol propane acrylate, trimethylol propane acrylate and tripropylene glycol diacrylate is added to the anticorrosive composition.

7. A process according to one of the preceding claims, **characterised in that** at least one flexibilising resin or/and at least one modified flexibilising resin based on unsaturated aliphatic polymers based on acrylate, methacrylate, polyester or/and polyurethane is additionally added to the anticorrosive composition.

8. A process according to one of the preceding claims, **characterised in that** at least one adhesion-promoting polymer is additionally added to the anticorrosive composition.

9. A process according to claim 8, **characterised in that** as the at least one adhesion-promoting polymer at least one based on phosphoric acid esters with polymers based on acrylate, epoxide, methacrylate, polyester, polyurethane or/and copolymers thereof is added.

10. A process according to one of the preceding claims, **characterised in that** at least one photoinitiator based on compounds selected from the group comprising amino ketones, benzoin ethers, benzophenones, dimethyl ketals, glyoxylates, hydroxyketones, hydroxyphenones, isopropyl ethers, metallocenes, organic iodine compounds, phenyl ketones, phenyl propanes, phosphine oxides and derivatives thereof is added to the anticorrosive composition in order to allow an anionic, cationic or/and radical cure.

11. A process according to one of the preceding claims, **characterised in that** at least one cross-linking agent based on isocyanate, isocyanurate, melamine resin or/and compounds which can release isocyanate or isocyanurate at elevated temperature is added to the anticorrosive composition in order to allow chemical subsequent cross-linking.

12. A process according to one of the preceding claims, **characterised in that** at least one first organic corrosion inhibitor selected from the group of compounds based on amines, derivatives of an organic acid, thiols and conductive polymers is added to the anticorrosive composition.

13. A process according to one of the preceding claims, **characterised in that** at least one further organic or/and inorganic corrosion inhibitor selected from the group of anticorrosive pigments based on silica(s), oxide(s) or/and silicate(s) and compounds of titanium, hafnium, zirconium, carbonate, ammonium carbonate, amines, amine derivatives, derivatives of an organic acid, thiols or/and conductive polymers is added to the anticorrosive composition.

14. A process according to claim 13, **characterised in that** corrosion inhibitors are added to the anticorrosive composition in a ratio of organic to inorganic corrosion inhibitors in the range from 1 : 8 to 1 : 20.

15. A process according to one of the preceding claims, **characterised in that** in each case at least one wetting agent, defoaming agent, lubricant, adhesion promoter, pigment, flow control agent, agent to increase reactivity, surface additive to raise scratch resistance, thixotropic auxiliary agent or/and substrate-wetting agent is added as additive to the anticorrosive composition.

16. A process according to one of the preceding claims, **characterised in that** the anticorrosive composition contains at least one lubricant selected from the group of compounds based on graphite, polyethylene, polypropylene, polytetrafluoroethylene, silane, siloxane and wax.

17. A process according to one of the preceding claims, **characterised in that** the anticorrosive composition contains as additive at least one pigment selected from the group of compounds based on coloured pigment, metal pigment, oxide, phosphate, phosphide, phosphosilicate, silicate, electrically conductive pigment and coated pigment.

18. A process according to one of the preceding claims, **characterised in that** on application the anticorrosive composition has a viscosity in the range from 80 to 20000 mPa•s, measured at a temperature of 25°C with a Haake VT 500 rotational viscometer with an MV DIN measuring cylinder in accordance with DIN 53019.

19. A process according to one of the preceding claims, **characterised in that** on application the anticorrosive composition has a temperature in the range from 5 to 90°C.

20. A process according to one of the preceding claims, **characterised in that** the anticorrosive composition is applied to the metallic surface by pouring without or with a knife, spraying, atomisation, dipping or/and rolling.

21. A process according to one of the preceding claims, **characterised in that** surfaces consisting of aluminium, aluminium-containing alloys, chromium, chromium alloys, magnesium alloys, stainless steel, steel, zinc, zinc-containing alloys, tin or/and tin-containing alloys are coated.

22. A process according to one of the preceding claims, **characterised in that** the wet film of the anticorrosive composition is dried at temperatures in the range from 30 to 95°C.

23. A process according to one of the preceding claims, **characterised in that** the largely or completely dry film of the anticorrosive composition is irradiated with UV radiation and is partially, largely or completely cross-linked in this way.

24. A process according to one of the preceding claims, **characterised in that** the anticorrosive composition and the anionically, cationically or/and radically cured dry film produced therewith contains at least one curing agent so that the dry film is chemically post-cured.

25. A process according to one of the preceding claims, **characterised in that** the substrate coated with the anticorrosive coating is coated with at least one further paint-like composition, paint, dye or/and adhesive.

26. A process according to one of the preceding claims, **characterised in that** the anticorrosive coating applied to the metallic body is re-formed with the substrate, wherein the anticorrosive coating remains largely or entirely undamaged.

27. A process according to one of the preceding claims, **characterised in that** the re-formed substrate in the form of a re-formed, cut or/and stamped metal sheet coated with the anticorrosive coating is connected to another construction element by clinching, gluing, welding or/and at least one other joining process.

28. A process according to one of the preceding claims, **characterised in that** the metallic surface is cleaned or/and pickled before application of the pretreatment primer layer.

29. A process according to one of the preceding claims, **characterised in that** the solution or dispersion is applied to a metallic strip carried on a conveyor belt system.

30. An organic, anionically, cationically or/and radically curable anticorrosive composition, **characterised in that** it is a dispersion or solution
which contains up to 3 wt.% water or/and up to 3 wt.% organic solvent and also reactive thinners,
which contains at least two components selected from the group of monomers, oligomers and polymers with a total content in the range from 50 to 95 wt.%, which are at least partially anionically, cationically or/and radically curable,
wherein a content of at least one monofunctional monomer or/and oligomer in the range from 1 to 58 wt.% with a content of isobornyl acrylate or/and isobornyl methacrylate and also a content of at least one base polymer based on acrylate, epoxide, methacrylate, polyester, polyurethane or/and copolymers thereof in the range from 5 to 50 wt.% are included herein, wherein the anticorrosive composition contains, moreover, at least one photoinitiator for anionic, cationic or/and radical cross-linking with a content in the range from 0.5 to 22 wt.%, if electron beam radiation is not used,
a first organic corrosion inhibitor
and also a total content of additives in the range from 0.05 to 22 wt.%,
relative in each case to the solids content in wt.%.

31. Use of the substrates coated by the process according to one of claims 1 to 29 in the steel industry, in vehicle construction or/and in aircraft construction, as wire, wire winding, wire mesh, metal sheet, cladding, screening, bodywork or part of a bodywork, part of a vehicle, trailer, recreational vehicle or missile, covering, housing, lamp, light, traffic-light element, item of furniture or furniture element, element of a domestic appliance, rack, profiled section, moulding of complex geometry, crash barrier element, radiator element or fencing element, bumper, part consisting of or having at least one pipe or/and a profiled section, window frame, door frame or bicycle frame or as a small component.

32. Use of the anticorrosive coating produced by the process according to one of claims 1 to 29 as a protective coating in re-forming or/and joining, as corrosion protection for surfaces or in the region of edges, seams or/and weld seams, as protection in place of cavity-sealing or/and seam-sealing.

## Revendications

1. Procédé de revêtement de surfaces de substrats métalliques avec une composition anticorrosion organique, durcissable par voie anionique, cationique ou/et radicalaire, **caractérisé**
**en ce que** la composition anticorrosion est une dispersion ou une solution qui contient jusqu'à 3 % en poids d'eau ou/et jusqu'à 3 % en poids de solvants organiques ainsi qu'un diluant réactif,
qui contient au moins deux constituants sélectionnés dans le groupe comprenant des monomères, des oligomères et des polymères avec une teneur totale comprise dans la plage allant de 50 à 95 % en poids, qui sont durcissables au moins en partie par voie anionique, cationique ou/et radicalaire,
sachant qu'il y a une teneur en au moins un monomère ou/et oligomère monofonctionnel comprise dans la plage allant de 1 à 58 % en poids avec une teneur en acrylate d'isobornyle ou/et méthacrylate d'isobornyle ainsi qu'une teneur en au moins un polymère de base à base d'acrylate, d'époxyde, de méthacrylate, de polyester, de polyuréthanne ou/et de leurs polymères mixtes, comprise dans la plage allant de 5 à 50 % en poids,
sachant que la composition anticorrosion contient en outre au moins un photoamorceur pour la réticulation anionique, cationique ou/et radicalaire avec une teneur comprise dans la plage allant de 0,5 à 22 % en poids, dans le cas où l'on n'utilise pas de rayonnement électronique
contient un premier inhibiteur de corrosion organique,
et présente une teneur totale en additifs comprise dans la plage allant de 0,05 à 22 % en poids,
respectivement par rapport aux teneurs en matières solides, en % en poids,
sachant que la composition anticorrosion est appliquée sur les surfaces métalliques, en une épaisseur de film humide dans la plage allant de 0,4 à 25 µm, et est ensuite durcie par voie anionique, cationique ou/et radicalaire pour obtenir un revêtement anticorrosion,
sachant que le revêtement anticorrosion présente une épaisseur de film sec allant de 0,4 à 20 µm et une résistance aux produits chimiques de plus de 40 cycles MEC, déterminée par essai MEC selon la norme ECCA T11 au méthyl-éthyl-cétone.

2. Procédé selon la revendication 1, **caractérisé en ce que**, avant le revêtement avec une première composition anticorrosion organique, on n'applique pas de couche de traitement préalable sur les surfaces métalliques.

3. Procédé selon la revendication 1 ou 2, **caractérisé en ce que** l'on ajoute à la composition anticorrosion des monomères ou/et des oligomères à base de composés insaturés.

4. Procédé selon la revendication 3, **caractérisé en ce que** l'on ajoute des acrylates aliphatiques insaturés à la composition anticorrosion.

5. Procédé selon l'une des revendications précédentes, **caractérisé en ce que** l'on ajoute à la composition anticorrosion au moins un monomère ou/et un oligomère polymérisable par voie anionique, cationique ou/et radicalaire, sélectionnés dans le groupe des composés à base d'acrylate, de méthacrylate, de polyester ou/et de polyuréthanne.

6. Procédé selon l'une des revendications précédentes, **caractérisé en ce que** l'on ajoute à la composition anticorrosion au moins un monomère ou/et un oligomère polymérisable par voie anionique, cationique ou/et radicalaire, sélectionnés dans le groupe comprenant des composés de diacrylate de butanediol, diacrylate de diéthylène-glycol, diacrylate de dipropylène-glycol, acrylate d'éthyl-2-hexyle, decyl acrylate de hexanediol, méthacrylate d'hydroxypropyle, acrylate d'isobornyle, méthacrylate d'isobornyle, diacrylate de polyéthylène, formal acrylate de triéthylol propane, triacrylate de triméthyle propane, formal acrylate de triméthylol propane, acrylate de triéthylol propane, acrylate de triméthylol propane et diacrylate de tripropylène glycol.

7. Procédé selon l'une des revendications précédentes, **caractérisé en ce que** l'on ajoute en plus à la composition anticorrosion au moins une résine d'élastification ou/et au moins une résine d'élastification modifiée, sur la base de polymères aliphatiques insaturés à base d'acrylate, de méthacrylate, de polyester ou/et de polyuréthanne.

8. Procédé selon l'une des revendications précédentes, **caractérisé en ce que** l'on ajoute en plus à la composition anticorrosion au moins un polymère promoteur d'adhérence.

9. Procédé selon la revendication 8, **caractérisé en ce que** l'on ajoute en tant que polymère promoteur d'adhérence, au nombre d'au moins un, au moins un à base d'esters phosphoriques avec des polymères à base d'acrylate, d'époxyde, de méthacrylate, de polyester; de polyuréthanne ou/et de leurs polymères mixtes.

10. Procédé selon l'une des revendications précédentes, **caractérisé en ce que** l'on ajoute à la composition anticorrosion au moins un photoamorceur à base de composés sélectionnés dans le groupe comprenant des amino-cétones, éthers de benzoïne, benzophénones, diméthylcétals, glyoxylates, hydroxycétones, éthers d'isopropyle, métallocènes, composés organiques de l'iode, phénylcétones, phénylpropanes, oxydes de phosphines et leurs dérivés, afin de permettre un durcissement anionique, cationique ou/et radicalaire.

11. Procédé selon l'une des revendications précédentes, **caractérisé en ce que** l'on ajoute à la composition anticorrosion au moins un agent de réticulation à base d'isocyanate, d'isocyanurate, de résine de mélamine ou/et de composés pouvant libérer de l'isocyanate ou de l'isocyanurate à température élevée, afin de permettre une post-réticulation.

12. Procédé selon l'une des revendications précédentes, **caractérisé en ce que** l'on ajoute à la composition anticorrosion au moins un premier inhibiteur de corrosion organique, sélectionné dans le groupe de composés à base d'amines, de dérivés d'un acide organique, de thiols et de polymères conducteurs.

13. Procédé selon l'une des revendications précédentes, **caractérisé en ce que** l'on ajoute à la composition anticorrosion au moins un autre inhibiteur de corrosion organique ou/et inorganique, sélectionné dans le groupe de pigments anticorrosion à base d'acide(s) silicique(s), d'oxyde(s) ou/et de silicate(s) et de composés de titane, de hafnium, de zirconium, de carbonate, de carbonate d'ammonium, d'amines, de dérivés d'amine, de dérivés d'un acide organique, de thiols ou/et de polymères conducteurs.

14. Procédé selon la revendication 13, **caractérisé en ce que** l'on ajoute à la composition anticorrosion des inhibiteurs de corrosion avec un rapport entre les inhibiteurs de corrosion organiques et les inhibiteurs inorganiques compris dans la plage allant de 1:8 à 1:20.

15. Procédé selon l'une des revendications précédentes, **caractérisé en ce que** l'on ajoute à la composition anticorrosion, en tant qu'additif, respectivement au moins un agent mouillant, un agent antimousse, un lubrifiant, un promoteur d'adhérence, un pigment, un agent d'écoulement, un agent pour augmenter la réactivité, un additif de surface pour augmenter la résistance aux rayures, un adjuvant thixotrope ou/et un agent de mouillage du support.

16. Procédé selon l'une des revendications précédentes, **caractérisé en ce que** la composition anticorrosion contient au moins un lubrifiant sélectionné dans le groupe de composés à base de graphite, de polyéthylène, de polypropylène, de polytétrafluoroéthylène, de silane, de siloxane et de cire.

17. Procédé selon l'une des revendications précédentes, **caractérisé en ce que** la composition anticorrosion contient, en tant qu'additif, au moins un pigment sélectionné dans le groupe de composés à base de pigment coloré, de pigment métallique, d'oxyde, de phosphate, de phosphure, de phosphosilicate, de silicate, de pigment électroconducteur et de pigment revêtu.

18. Procédé selon l'une des revendications précédentes, **caractérisé en ce que** lors de l'application, la composition anticorrosion présente une viscosité comprise dans la plage allant de 80 à 20 000 mPa*s, mesurée à une température de 25 °C avec un viscosimètre rotatif VT 500 de la société Haake, doté d'un cylindre de mesure DIN MV selon DIN 53019.

19. Procédé selon l'une des revendications précédentes, **caractérisé en ce que** lors de l'application, la composition anticorrosion présente une température comprise dans la plage allant de 5 à 90 °C.

20. Procédé selon l'une des revendications précédentes, **caractérisé en ce que** la composition anticorrosion est appliquée sur la surface métallique par coulée sans ou avec racle, par projection, par pulvérisation, par immersion ou/et au rouleau.

21. Procédé selon l'une des revendications précédentes, **caractérisé en ce que** l'on recouvre des surfaces en aluminium, en alliages contenant de l'aluminium, en chrome, en alliages de chrome, en alliages de magnésium, en acier inoxydable, en acier, en zinc, en alliages contenant du zinc, en étain ou/et en alliages contenant de l'étain.

22. Procédé selon l'une des revendications précédentes, **caractérisé en ce que** le film humide de la composition anticorrosion est séché à des températures comprises dans la plage allant de 30 à 95 °C.

23. Procédé selon l'une des revendications précédentes, **caractérisé en ce que** le film sensiblement ou complètement sec de la composition anticorrosion est exposé à un rayonnement UV et est de ce fait réticulé en partie, dans une large mesure ou complètement.

24. Procédé selon l'une des revendications précédentes, **caractérisé en ce que** la composition anticorrosion et le film sec fabriqué avec celle-ci, durci par voie anionique, cationique ou/et radicalaire, contient au moins un agent durcissant, de sorte que le film sec est soumis à un post-durcissement chimique.

25. Procédé selon l'une des revendications précédentes, **caractérisé en ce que** le substrat recouvert avec le revêtement anticorrosion est recouvert d'au moins une autre composition de type laque, de laque, de peinture ou/et d'un adhésif.

26. Procédé selon l'une des revendications précédentes, **caractérisé en ce que** le revêtement anticorrosion appliqué sur le corps métallique est mis en forme avec le substrat, le revêtement anticorrosion restant dans une large mesure ou totalement intact.

27. Procédé selon l'une des revendications précédentes, **caractérisé en ce que** le substrat recouvert avec le revêtement anticorrosion et mis en forme, sous la forme d'une tôle façonnée, découpée ou/et estampée, est relié à un autre élément de construction par rivetage, collage, soudage ou/et au moins un autre procédé d'assemblage.

28. Procédé selon l'une des revendications précédentes, **caractérisé en ce que**, avant l'application de la couche primaire de traitement préalable, la surface métallique est nettoyée ou/et décapée.

29. Procédé selon l'une des revendications précédentes, **caractérisé en ce que** la solution ou la dispersion est appliquée sur une bande métallique guidée sur une installation à bande.

30. Composition anticorrosion organique, durcissable par voie anionique, cationique, ou/et radicalaire, **caractérisée en ce qu'**elle est une dispersion ou une solution,
qui contient jusqu'à 3 % en poids d'eau ou/et jusqu'à 3 % en poids de solvants organiques ainsi qu'un diluant réactif,
qui contient au moins deux constituants sélectionnés dans le groupe comprenant des monomères, des oligomères et des polymères avec une teneur totale dans la plage allant de 50 à 95 % en poids, qui sont durcissables au moins en partie par voie anionique, cationique ou/et radicalaire,
sachant qu'il y a une teneur en au moins un monomère ou/et un oligomère monofonctionnel comprise dans la plage allant de 1 à 58 % en poids avec une teneur en acrylate d'isobornyle ou/et méthacrylate d'isobornyle ainsi qu'une teneur en au moins un polymère de base à base d'acrylate, d'époxyde, de méthacrylate, de polyester, de polyuréthanne ou/et de leurs polymères mixtes dans la plage allant de 5 à 50 % en poids,
sachant que la composition anticorrosion contient en outre au moins un photoamorceur pour la réticulation anionique, cationique ou/et radicalaire avec une teneur comprise dans la plage allant de 0,5 à 22 % en poids, dans le cas où l'on n'utilise pas de rayonnement électronique
contient un premier inhibiteur de corrosion organique,
et présente une teneur totale en additifs comprise dans la plage allant de 0,05 à 22 % en poids,
respectivement par rapport aux teneurs en matières solides, en % en poids.

31. Utilisation des substrats revêtus conformément au procédé selon l'une des revendications 1 à 29, dans l'industrie sidérurgique, dans la construction automobile ou/et dans la construction aéronautique, en tant que fil métallique, enroulement de fil métallique, treillis en fil métallique, tôle, carénage, écran de protection, carrosserie ou élément d'une carrosserie, élément d'un véhicule, remorque, camping-car ou engin volant, élément de recouvrement, boîtier, lampe, luminaire, suspension, meuble, élément de meuble, élément d'un appareil ménager, châssis, profilé, pièce façonnée à géométrie complexe, élément de glissière de sécurité, de corps de chauffe ou de clôture, parechocs, élément constitué d'un tube ou/et d'un profilé ou comportant au moins un tube ou/et un profilé, cadre de fenêtre, de porte ou de bicyclette, ou en tant que petite pièce.

32. Utilisation du revêtement anticorrosion réalisé conformément au procédé selon l'une des revendications 1 à 29, en tant que revêtement de protection lors de la mise en forme ou/et de l'assemblage, en tant que protection anticorrosion de surfaces ou dans des zones d'arêtes, de jonctions ou/et de soudures, comme protection à la place d'un scellement de corps creux ou/et d'une étanchéité de jonction.
